# EUROPÄISCHE PATENTSCHRIFT

(11) **EP 3 559 765 B1**
(45) Veröffentlichungstag und Bekanntmachung des Hinweises auf die Patenterteilung: **17.03.2021**
(21) Anmeldenummer: 17844600.1
(22) Anmeldetag: 20.12.2017
(51) Int. Cl.: G05B 19/12, G05B 19/418, B23K 26/38

(54) **VERFAHREN ZUR KENNZEICHNUNG VON WERKSTÜCKEN, ZUGEHÖRIGE PRODUKTIONSSTATION UND ZUGEHÖRIGES AUFRÜSTVERFAHREN**
METHOD FOR IDENTIFYING WORKPIECES, ASSOCIATED MANUFACTURING STATION AND ASSOCIATED RE-FITTING METHOD
PROCÉDÉ D'IDENTIFICATION DE PIÈCES, POSTE DE PRODUCTION ASSOCIÉ ET PROCÉDÉ DE MODERNISATION ASSOCIÉ

(30) Priorität: 22.12.2016 DE 102016226062
(43) Veröffentlichungstag der Anmeldung: 30.10.2019
(73) Patentinhaber: TRUMPF Werkzeugmaschinen GmbH & Co. KG, 71254 Ditzingen (DE)
(72) Erfinder: EPPERLEIN, Peter, 712 29 Leonberg (DE)
(74) Vertreter: Kohler Schmid Möbus Patentanwälte
(86) Internationale Anmeldenummer: PCT/EP2017/083732
(87) Internationale Veröffentlichungsnummer: WO 2018/115075

(56) Entgegenhaltungen:
- EP-A1- 0 483 652
- EP-A1- 1 524 063
- EP-A2- 0 476 398
- DE-A1- 19 738 753
- DE-A1-102013 205 628
- JP-B2- 3 425 988
- US-A1- 2008 023 900
- Trumpf Werkzeugmaschinen GmbH: "Trumpf Automatisierung - Alles im Griff", , 31. Juli 2016 (2016-07-31), XP002781980, Gefunden im Internet: URL:https://www.trumpf.com/filestorage/TRU MPF_Master/Products/Machines_and_Systems/0 2_Brochures/TRUMPF-automation-catalogue-DE .pdf [gefunden am 2018-06-14]

## Beschreibung

Die Erfindung betrifft ein Verfahren zur Kennzeichnung von Werkstücken, wobei eine Produktionsmaschine eine Vielzahl von Werkstücken produziert und die produzierten Werkstücke sortiert auf mehrere Werkstücksammeleinheiten verteilt werden,
wobei die produzierten Werkstücke mit einer Automatisierungsvorrichtung zu den Werkstücksammeleinheiten verbracht werden,
und wobei auf den Werkstücksammeleinheiten Kennzeichnungselemente angeordnet werden, die jeweils direkt und/oder indirekt Informationen über die Werkstücke auf den Werkstücksammeleinheiten tragen.

Eine Kombination einer Laserschneidmaschine mit einer Automatisierungsvorrichtung zur Teilesortierung und Stapelung ist beispielsweise aus der Firmendruckschrift "Trumpf Automatisierung Alles im Griff" der Trumpf GmbH & Co. KG, Ditzingen, DE, Seite 24, Drucklegung 08/2015, bekannt geworden.

Blechteile aus Metall werden in vielfältiger Weise beim Bau von Maschinen und Geräten benötigt. Typische Produktionsmaschinen wie Laserschneidmaschinen oder Stanzmaschinen fertigen dabei meist aus einem Stück Metallblech eine Vielzahl von unterschiedlichen Typen von Werkstücken in kurzer Folge. Mittels einer Automatisierungsvorrichtung werden die Werkstücke auf Werkstücksammeleinrichtungen an Bereitstellungsorten verbracht, wo die Werkstücke eines jeweiligen Typs gesammelt werden, etwa auf einer Palette gestapelt werden.

Um den Materialfluss in einer komplexen Fertigungsanlage leicht weiterverfolgen zu können, sind Werkstückkennzeichnungen hilfreich, insbesondere bei kleinen Losgrößen, die viele händische steuernde Tätigkeiten erfordern. Typischerweise werden die Werkstücke auf einer jeweiligen Werkstücksammeleinrichtung mit einem Laufzettel versehen, auf dem wichtige Informationen über die bezeichneten Werkstücke enthalten sind, etwa Teiletyp, Auftragsnummer, zu durchlaufende Bearbeitungsstationen usw. Die Laufzettel werden meist manuell von einem Mitarbeiter an der Werkstücksammeleinrichtung angeordnet bzw. befestigt. Dieses Vorgehen ist zeitlich aufwendig, und es kann leicht zu Verwechslungen und damit falschen Teiledeklarationen durch den Mitarbeiter kommen. Zudem kann die Anbringung des Laufzettels schlicht vergessen werden, oder der Laufzettel kann verloren gehen.

Es ist auch möglich, Werkstücke unmittelbar zu beschriften, etwa mittels Gravieren oder Laserbeschriften. Dies ist aber zeitaufwendig (oft verbunden mit einer Hauptzeitunterbrechung), in der Regel irreversibel und kann nur wenige Informationen weitergeben.

Aus der DE 10 2007 007 729 B3 ist es bekannt, bei einer mit Stapelgut beladenen Palette an einer Zwischenlage, die beim Beladen der Palette zwischen zwei Lagen aus Stapelgut eingebracht wird, ein Kennzeichnungselement mit Informationen über das Stapelgut zu befestigen. Das Kennzeichnungselement wird dabei durch einen mittels Verformen der Zwischenlage und des Kennzeichnungselements erzeugten Formschluss an der Zwischenlage befestigt. Das Kennzeichnungselement kann mit den Informationen bedruckt werden oder ein RFID-Chip des Kennzeichnungselements kann mit den Informationen programmiert werden. Die US 2009/0224923 A1 beschreibt ein RFID-Anwendungssystem, bei dem ein RFID-Schreibgerät mit einem Förderband koordiniert wird, wobei Produkte auf dem Förderband mit RFID-Tags versehen werden.

Die Verwendung von besonderen Vorrichtungen zum Anbringen der Kennzeichnungselemente bzw. RFID-Tags ist aufwendig und teuer.

### Aufgabe der Erfindung

Der Erfindung liegt die Aufgabe zugrunde, auf einfache und kostengünstige Weise Werkstücke zu kennzeichnen.

### Kurze Beschreibung der Erfindung

Diese Aufgabe wird gelöst durch ein Verfahren mit den Merkmalen des Anspruchs 1 sowie durch eine Produktionsstation mit den Merkmalen des Anspruchs 16, als auch ein Verfahren zum Aufrüsten einer Produktionsmaschine mit den Merkmalen des Anspruchs 25. Vorteilhafte Weiterbildungen finden sich in den Merkmalen der Unteransprüche, der nachfolgenden Beschreibung und der Zeichnungen.

Eine Lösung der Aufgabe erfolgt durch ein Verfahren der eingangs genannten Art, das dadurch gekennzeichnet ist, dass die von einer Bereitstellungsvorrichtung bereitgestellten Kennzeichnungselemente, die jeweils direkt und/oder indirekt Informationen über die Werkstücke auf den Werkstücksammeleinheiten tragen, mittels einer Beförderungsvorrichtung vom Ort der Bereitstellungsvorrichtung an eine Übergabezone im Arbeitsbereich der Automatisierungsvorrichtung verbracht werden, und dass die Automatisierungsvorrichtung ein jeweiliges bereitgestelltes Kennzeichnungselement von der Übergabezone zur zugehörigen Werkstücksammeleinheit verbringt.

Die Produktionsmaschine kann dabei eine Maschine sein, die eingerichtet ist zum Umformen, Schneiden, Biegen, Stanzen, Pressen, Verformen, Schweißen, Sägen, Fräsen von den Werkstücken, insbesondere nach einem Bearbeitungsplan. Die Produktionsmaschine kann als eine Flachbettmaschine ausgestaltet sein. Die Produktionsmaschine kann eine Maschine zum Bearbeiten von Metall, besonders bevorzugt zum Bearbeiten von Blech, sein. Die Werkstücksammeleinheiten können Vorrichtungen zum Sortieren und gemeinsamen Transport von produzierten Werkstücken sein. Dies können beispielsweise Paletten oder Behälter sein.

Die Automatisierungsvorrichtung kann eine Vorrichtung sein, die eingerichtet ist, die produzierten Werkstücke zu den Werkstücksammeleinheiten zu transportieren bzw. zu verbringen. Dies kann z.B. ein Greifmittel sein. Ein Greifmittel kann die Werkstücke mittels mechanischen, pneumatischen magnetischen, elektrostatischen oder anderen Kräften ergreifen und zu den Werkstücksammeleinheiten verbringen. Eine Automatisierungseinrichtung kann z.B. auch eine Rutschvorrichtung sein, die eingerichtet ist, die Werkstücke zu den Werkstücksammeleinheiten zu verbringen.

Kennzeichnungselemente können Elemente sein, die jeweils direkt und/oder indirekt Informationen über die Werkstücke auf den Werkstücksammeleinheiten tragen. Insbesondere können dies einfache Karten sein, insbesondere Plastikkarten, die bedruckt sind, oder bedruckbar sind. Andere Formen für Kennzeichnungselemente sind im weiteren Verlauf der Beschreibung offenbart

Die Bereitstellungsvorrichtung kann eine Vorrichtung sein, in der die Kennzeichnungselemente vorrätig gehalten werden können. Dies können einfache Ablagevorrichtungen oder Behälter sein.

Die Automatisierungsvorrichtung kann in der Regel nicht auf beliebige Orte zugreifen, sondern nur auf einen begrenzten Bereich, den sogenannten Arbeitsbereich der Automatisierungsvorrichtung. Die Übergabezone liegt innerhalb dieses Arbeitsbereichs der Automatisierungsvorrichtung. So kann die Automatisierungsvorrichtung auf die in der Übergabezone abgelegten Kennzeichnungselemente ohne menschliche Hilfe zugreifen.

Im Rahmen der vorliegenden Erfindung ist es vorgesehen, eine Bereitstellungsvorrichtung für Kennzeichnungselemente mit der Automatisierungsvorrichtung zu koppeln, sodass bereitgestellte Kennzeichnungselemente von der Automatisierungsvorrichtung wie Werkstücke (Gutteile) gehandhabt (insbesondere ergriffen und/oder verfahren und/oder fallengelassen) werden können und jeweils zu den zu kennzeichnenden Werkstücken der zugehörigen Werkstücksammeleinheiten (bzw. Bereitstellungsorten) verbracht bzw. zusortiert werden können. Dadurch kann die Automatisierungsvorrichtung, die für den Transport der produzierten Werkstücke von der Produktionsmaschine zu den Werkstücksammeleinheiten ohnehin notwendig ist, auch für den Transport der Kennzeichnungselemente zu den Werkstücksammeleinheiten verwendet werden. Dazu müssen die von der Bereitstellungsvorrichtung bereitgestellten Kennzeichnungselemente lediglich im Arbeitsbereich der Automatisierungsvorrichtung zur Verfügung gestellt werden, was in der Regel einfach (insbesondere automatisch) möglich ist, und mechanisch für eine Handhabung durch die Automatisierungsvorrichtung geeignet bzw. ausgebildet sein (etwa bezüglich einer Mindestgröße von Klemmkanten für die Anlage von Klemmbacken oder von einer ebenen Ansaugfläche für die Anlage eines Sauggreifers). Die Automatisierungsvorrichtung wird wie bei der Zusortierung der Werkstücke auch bei der Zusortierung der Kennzeichnungselemente angesteuert, so dass die Zuordnung der Kennzeichnungselemente jeweils zur gewünschten Werkstücksammeleinheit (bzw. Bereitstellungsort) praktisch ohne Mehraufwand möglich ist. Eine separate Maschine zum Zusortieren der Kennzeichnungselemente oder zum Anordnen der Kennzeichnungselemente auf den Werkstücksammeleinheiten ist nicht nötig.

Im Allgemeinen nimmt die Bereitstellungsvorrichtung Kennzeichnungselemente aus einem Vorrat auf, die zunächst weder direkt noch indirekt Informationen über Werkstücke tragen; nach der Verarbeitung in der Bereitstellungsvorrichtung sind die Informationen über die Werkstücke auf den zugehörigen Werkstücksammeleinheiten direkt oder indirekt durch die bereitgestellten Kennzeichnungselemente verfügbar. Allgemein trägt die Bereitstellungsvorrichtung zur Niederlegung der Informationen auf den Kennzeichnungselementen und/oder zur Zuordnung der Informationen zu den Kennzeichnungselementen bei, typischerweise in Verbindung mit einer Steuerungsvorrichtung und/oder einer Datenbank.

Die Bereitstellungsvorrichtung kann eine Schreibvorrichtung umfassen, mit der die Kennzeichnungselemente mit den Informationen über die Werkstücke direkt beschrieben werden. Die Schreibvorrichtung kann alternativ oder zusätzlich eine Zuordnungskennzeichnung (etwa einen alphanumerischen Code) für diese Informationen auf die Kennzeichnungselemente schreiben. Die "bereitgestellten Kennzeichnungselemente" können dann auch als "beschriebene Kennzeichnungselemente" bezeichnet werden.

Die Bereitstellungsvorrichtung kann alternativ oder zusätzlich auch eine Ermittlungsvorrichtung (oder Erkennungsvorrichtung) umfassen, die eine bereits auf den Kennzeichnungselementen (fest) abgelegte Zuordnungskennzeichnung (etwa einen alphanumerischen Code) ermittelt. Die Ermittlungsvorrichtung kann die bereits auf den Kennzeichnungselementen abgelegte Zuordnungskennzeichnung mit einer Lesevorrichtung auslesen. Alternativ oder zusätzlich kann die Ermittlungsvorrichtung die bereits auf den Kennzeichnungselementen abgelegte Zuordnungskennzeichnung indirekt ermitteln, etwa durch Abzählen der Kennzeichnungselemente. Die Kennzeichnungselemente können dazu in einer vorbestimmten Reihenfolge der Bereitstellungsvorrichtung zugeführt werden, wobei die Zuordnung der Kennzeichnungselemente-Reihenfolge zu ihrer Zuordnungskennzeichnung einer übergeordneten Steuerungsvorrichtung, insbesondere mit einer externen Datenbank, oder der Bereitstellungsvorrichtung bekannt ist. So lässt sich eine Schreib- oder Lesevorrichtung sparen. Informationen zu den Werkstücken können den Kennzeichnungselementen (oder Maschinen oder Menschen) unter Verwendung der Zuordnungskennzeichnung noch später übermittelt werden, z. B. wenn die Kennzeichnungselemente ein eigenes Steuermodul mit einem Empfänger aufweisen. Auf diese Weise wird jedes Kennzeichnungselement der zugehörigen Werkstücksammeleinheit mittels einer Zuordnungskennzeichnung eindeutig zugeordnet.

Mittels der zusortierten Kennzeichnungselemente werden die verschiedenen Werkstücke auf den Werkstücksammeleinheiten kenntlich gemacht und können in darauffolgenden Fertigungsschritten eindeutig identifiziert, zugeordnet und wiedergefunden werden. Beispielsweise kann für die Werkstücke an der darauffolgenden Fertigungsstation das passende Fertigungsprogramm leicht ermittelt und geladen werden.

Zusammenfassend können die vorhandenen Automatisierungsachsen synergetisch genutzt werden, und der mechanische Aufwand zur Integration, insbesondere der Bereitstellungsvorrichtung, ist gering. Eine Nachrüstung des Verfahrens bei einer vorhandenen Produktionsmaschine-Automatisierungsvorrichtung-Kombination ist einfach möglich. Die Zusortierung der Kennzeichnungselemente kann weitgehend oder sogar vollständig hauptzeitparallel erfolgen. Mit dem Kennzeichnungselement kann eine Informationslücke zwischen Cloud, EPR-System und Produktionsmaschine geschlossen werden.

Eine Werkstücksammeleinheit kann beispielsweise eine Palette oder ein Teilbereich einer Palette sein, wo die Werkstücke abgelegt und aufeinander gestapelt werden ("Stapelplatz"); ggf. können auf einer Palette auch mehrere Stapelplätze und somit mehrere Werkstücksammeleinheiten eingerichtet sein. Ebenso kann eine Werkstücksammeleinheit eine Palette sein, auf der mehrere Werkstücke nebeneinander abgelegt werden. Eine Werkstücksammeleinheit kann auch als ein Behälter ausgebildet sein, in den Werkstücke eingeworfen werden. In der Regel werden auf einer Werkstücksammeleinheit nur Werkstücke gleichen Typs angeordnet. Mehrere Werkstücksammeleinheiten können für eine gemeinsame Handhabung (insbesondere Transport) auf einer gemeinsamen Werkstücksammeleinrichtung zusammengefasst sein. Eine Werkstücksammeleinrichtung kann beispielsweise eine Palette mit mehreren Stapelplätzen sein. Eine Werkstücksammeleinrichtung kann auch ein Rollwagen sein, auf dem mehrere Behälter angeordnet oder ausgebildet sind.

Typischerweise werden parallel zueinander wenigstens fünf Werkstücksammeleinheiten mit Werkstücken beschickt und jeweils mit einem Kennzeichnungselement versehen (meist abschließend). Die Werkstücksammeleinheiten an ihren Bereitstellungsorten werden nach fertiger Beschickung mit Werkstücken durch leere Werkstücksammeleinheiten ersetzt.

Die Kennzeichnungselemente sind typischerweise standardisiert (d.h. für eine Vielzahl, meist alle vorkommenden, Typen von Werkstücken gleich) und umfassen einen Träger, auf den die Informationen und/oder eine Zuordnungskennzeichnung geschrieben werden (etwa mittels eines Aufdrucks, oder auch elektronisch) und/oder auf dem eine Zuordnungskennzeichnung fest hinterlegt (etwa aufgedruckt oder programmiert) ist. An der Bereitstellungsvorrichtung ist typischerweise eine Vielzahl von Kennzeichnungselementen bevorratet.

Typischerweise produziert die Produktionsmaschine in rascher Folge Werkstücke unterschiedlichen Typs, die von der Automatisierungsvorrichtung den Werkstücksammeleinheiten laufend zusortiert werden.

Die Automatisierungsvorrichtung kann mehrere Komponenten umfassen, mit denen jeweils nur einen Teil des Transportwegs zurückgelegt wird, und/oder die für unterschiedliche Werkstücktypen zuständig sind. Im Rahmen der Erfindung können insbesondere folgende zwei Verfahren der automatisierten Werkstücksortierung einzeln oder in Kombination angewandt werden:
1. Werkstücke werden mit Greifern geholt und auf Paletten gestapelt.
2. Werkstücke werden in Behälter/Kisten fallen gelassen.

Bei einer Kombination werden typischerweise kleinere Werkstücke/Teile (meist Schüttgut) sortiert in die Kisten abgeworfen, und größere Werkstücke/Teile auf einer Palette gestapelt. Die Werkstücke sind beispielsweise formgeschnittene Teile, etwa Blechteile. Die Automatisierungsvorrichtung umfasst beispielsweise einen Sauggreifer, oder auch eine Werkstückzwischenablage mit nachgeordneter Werkstückrutsche und Werkstücktransportwagen mit Auswurfklappe.

Die Informationen über die (in der Regel gleichartigen) Werkstücke auf einer Werkstücksammeleinheit umfasst beispielsweise die Art der Werkstücke (meist als Typennummer), die Produktionszeit (meist als Produktionsdatum), einen Produktionsort (etwa die Angabe des Werks oder einer Produktionslinie), eine Auftragskennung (meist eine Auftragsnummer), einen Auftraggeber (Kunde) und/oder Produktionsablaufinformationen (etwa eine nächste Bearbeitungsstation).

Das Kennzeichnungselement ist im einfachsten Fall mit einer Farbe bedruckt, um die Informationen darzustellen. Das Kennzeichnungselement kann auch eine Anzeige in Form eines elektronischen Papiers aufweisen, eine so genannte E-Ink-Anzeige. Diese Anzeige kann per Funk oder Infrarot verändert werden. So können auf dem Kennzeichnungselement die Informationen über die Werkstücke auf einer Werkstücksammeleinheit (bzw. der den Werkstücken oder der Werkstücksammeleinheit zugeordnete Auftrag) angezeigt werden. Ein Kennzeichnungselement kann dafür selbst ein Steuerungselement (Steuermodul) für die eine Anzeige (insbesondere E-Ink-Anzeige) aufweisen. Zusätzlich kann es einen Empfänger für elektromagnetische Signale (Funk, Licht, Infrarot) aufweisen, um auf der E-Ink-Anzeige darzustellende Informationen zu empfangen.

Falls das Kennzeichnungselement von der Bereitstellungsvorrichtung mit einer Zuordnungskennzeichnung beschrieben wird oder bereits eine Zuordnungskennzeichnung trägt, die über die Bereitstellungsvorrichtung ermittelt wird und den Informationen über die Werkstücke in einer Datenbank zugeordnet wird, werden typischerweise anschließend vom Kennzeichnungselement mittels der Zuordnungskennzeichnung die Informationen über die Werkstücke auf der Werkstücksammeleinheit über eine Datenverbindung zu der Datenbank (meist über eine übergeordnete Steuerungsvorrichtung, insbesondere mit einer externen Datenbank), eingeholt und sodann angezeigt, etwa auf einer E-Ink-Anzeige, und/oder für eine maschinelle Auslesung bereitgehalten. Ebenso können bei Bedarf von Maschinen oder Menschen die Information mittels der Zuordnungskennzeichnung aus der Datenbank abgerufen werden. Die Zuordnungskennzeichnung stellt somit indirekt die Informationen über die Werkstücke auf der Werkstücksammeleinheit dar bzw. bereit.

Das Kennzeichnungselement kann ferner eine Signalvorrichtung aufweisen, mit der sich das Kennzeichnungselement kenntlich machen kann. Damit können Werkstücksammeleinheit leichter geortet werden.

### Bevorzugte Varianten der Erfindung

### Varianten zur Funktion der Bereitstellungsvorrichtung

Bevorzugt ist eine Variante des erfindungsgemäßen Verfahrens, bei dem die Bereitstellungsvorrichtung die bereitzustellenden Kennzeichnungselemente jeweils direkt mit den Informationen über die Werkstücke beschreibt. Das direkte Beschreiben (mit optisch sichtbaren Schriftzeichen oder auch elektronisch) ist besonders einfach und gestattet einen unmittelbaren Zugriff auf die Informationen, ohne Zugriff auf eine Steuervorrichtung oder (externe) Datenbank.

Vorteilhaft ist eine Variante, die vorsieht, dass die von der Bereitstellungsvorrichtung bereitgestellten Kennzeichnungselemente jeweils eine individuelle Zuordnungskennzeichnung tragen, und dass in einer Datenbank den Zuordnungskennzeichnungen der bereitgestellten oder bereitzustellenden Kennzeichnungselemente jeweils die Informationen über die Werkstücke auf den Werkstücksammeleinheiten zugeordnet werden. Die Zuordnungskennzeichnungen tragen somit indirekt die Informationen über die Werkstücke auf den Werkstücksammeleinheiten. Nach Ablesen oder Auslesen der Zuordnungskennzeichnung eines Kennzeichnungselements können aus der Datenbank die zugeordneten Informationen über die Werkstücke abgerufen werden. Dadurch kann eine große Menge von Informationen, die insbesondere nicht durch die bedruckbare Größe oder programmierbare Kapazität des Kennzeichnungselements beschränkt ist, verfügbar gemacht werden. Zudem können in der Datenbank die Informationen einfach aktualisiert werden, falls gewünscht. Sofern das Kennzeichnungselement dafür ausgestattet ist (etwa mit einem eigenen Steuerungsmodul und einem Empfänger), kann dieses später auch selbst die zugeordneten Informationen (ganz oder teilweise) mittels seiner Zuordnungskennzeichnung abrufen (bspw. über ein WLAN), insbesondere um die Informationen auf einem Display des Kennzeichnungselements anzuzeigen. Wichtig ist dabei die eindeutige Zuordnung der Kennzeichnungselemente mittels der Zuordnungskennzeichnung zu den zugehörigen Werkstücksammeleinheiten, die unter Mitwirkung der Bereitstellungsvorrichtung erfolgt.

In einer vorteilhaften Weiterentwicklung dieser Variante werden die bereitzustellenden Kennzeichnungselemente von der Bereitstellungvorrichtung jeweils mit einer Zuordnungskennzeichnung beschrieben. Dies ist besonders einfach und zuverlässig. Die Kennzeichnungselemente benötigen insbesondere keine vorherige Präparation mit einer festen Zuordnungskennzeichnung und/oder mit einer bekannten Ordnung.

Ebenso ist es in einer vorteilhaften Weiterentwicklung möglich, mittels der Bereitstellungsvorrichtung jeweils eine auf den bereitzustellenden Kennzeichnungselementen fest hinterlegte Zuordnungskennzeichnung auszulesen. In diesem Fall wird keine Schreibvorrichtung an der Bereitstellungsvorrichtung benötigt. Die fest hinterlegte Zuordnungskennzeichnung kann auch bei einer mehrmaligen Verwendung des Kennzeichnungselements jeweils erneut genutzt werden.

Eine andere Weiterentwicklung sieht vor, dass die Bereitstellungsvorrichtung die bereitzustellenden Kennzeichnungselemente einem Vorrat entnimmt, in welchem Kennzeichnungselemente mit bekannten, fest hinterlegten Zuordnungskennzeichnungen in einer bekannten Ordnung gelagert sind, insbesondere wobei die Kennzeichnungselemente des Vorrats einen Stapel bilden, und dass eine Zuordnungskennzeichnung für ein bereitzustellendes Kennzeichnungselement mittels einer Entnahmeinformation ermittelt wird, wobei die Entnahmeinformation die Position des bereitzustellenden Kennzeichnungselements bezüglich der bekannten Ordnung beschreibt, insbesondere wobei die Entnahmeinformation ein Zählindex der von dem Stapel genommenen Kennzeichnungselemente ist. In diesem Fall benötigt die Bereitstellungsvorrichtung weder eine Lesevorrichtung noch eine Schreibvorrichtung für die Kennzeichnungselemente. Über die Entnahmeinformation und die typischerweise in der Datenbank hinterlegte bekannte Ordnung kann eine Zuordnung der Informationen über die Werkstücke zur Zuordnungskennzeichnung des Kennzeichnungselements erfolgen.

Eine bevorzugte Variante des erfindungsgemäßen Verfahrens sieht vor, dass die Bereitstellungssvorrichtung das Kennzeichnungselement sowohl maschinenlesbar als auch für Menschen lesbar beschreibt. Durch eine maschinenlesbare Beschriftung können nachfolgende Automatisierungsprozesse vereinfacht werden. Eine für Menschen lesbare Beschriftung ermöglicht die Identifikation der Werkstücke ohne weitere Hilfsmittel. Zum maschinenlesbaren Beschreiben kann ein RFID-Chip programmiert werden, oder auch ein Barcode oder ein QR-Code aufgedruckt werden. Für Menschen lesbares Beschreiben erfolgt typischerweise durch Bedrucken mit Schriftzeichen oder Bildern oder entsprechendes Ansteuern einer elektronischen Anzeige (z.B. ein E-Paper, E-Ink).

Bevorzugt ist eine Variante, bei der die Bereitstellungsvorrichtung das Kennzeichnungselement reversibel beschreibt. Dann kann das Kennzeichnungselement später (für eine andere Werkstücksammeleinheit mit anderen Werkstücken) einfach wiederverwendet werden.

Besonders bevorzugt ist eine Variante, bei der die Bereitstellungsvorrichtung einen RFID-Chip des Kennzeichnungselements programmiert. Die Programmierung ist typischerweise reversibel, d.h. der RFID-Chip kann bei einer erneuten Verwendung des Kennzeichnungselements mit anderen Werkstücken neu programmiert werden. Die Programmierung enthält direkt oder indirekt die Informationen über die Werkstücke und kann von einem RFID-Lesegerät ausgelesen werden. Mittels RFID ist ein berührungsloses (meist auf einige Meter Entfernung) und von der Orientierung des Kennzeichnungsmittels weitgehend unabhängiges Auslesen des Kennzeichnungselements möglich.

Vorteilhaft ist auch eine Variante, bei der die Bereitstellungsvorrichtung das Kennzeichnungselement bedruckt. Ein Bedrucken ist vergleichsweise kostengünstig möglich. Die Bedruckung erfolgt bevorzugt reversibel, d.h. der das Kennzeichnungselement kann bei einer erneuten Verwendung des Kennzeichnungselement mit anderen Werkstücken (typischerweise nach geeigneter Reinigung) neu bedruckt werden.

### Varianten zur Funktion der Automatisierungsvorrichtung

Bei einer bevorzugten Variante ist vorgesehen, dass die Automatisierungsvorrichtung zumindest auf einem Teil der Werkstücksammeleinheiten jeweils einen Stapel von Werkstücken bildet und ein Kennzeichnungselement oben auf oder neben dem Stapel von Werkstücken ablegt,
insbesondere wobei zumindest ein Teil der Werkstücksammeleinheiten jeweils eine Palette oder einen Teilbereich einer Palette umfasst, auf der oder dem jeweils der Stapel gebildet wird. Durch die Bildung von Stapeln kann auf kompaktem Raum eine große Zahl von Teilen bevorratet und für eine automatische weitere Handhabung günstig bereitgehalten werden. Durch Anordnung des Kennzeichnungselements auf oder neben dem Stapel ist dieses meist leicht für Arbeiter lesbar und für maschinelle Lesegeräte auslesbar.

Ebenso bevorzugt ist eine Variante, bei der die Automatisierungsvorrichtung zumindest auf einem Teil der Werkstücksammeleinheiten jeweils einen Haufen von Werkstücken bildet und ein Kennzeichnungselement oben auf oder neben den Haufen von Werkstücken ablegt,
insbesondere wobei zumindest ein Teil der Werkstücksammeleinheiten einen Behälter, bevorzugt einen verschließbaren Behälter, umfasst, in welchem der Haufen gebildet wird. Mittels Behältern können große Mengen von typischerweise kleinen Teilen gut gehandhabt werden. Durch Anordnung des Kennzeichnungselements auf dem Haufen (meist im Behälterinneren) oder neben dem Haufen (meist außerhalb des Behälterinneren, etwa an einer besonderen Ablage seitlich am Behälter) ist dieses meist leicht für Arbeiter lesbar und für maschinelle Lesegeräte auslesbar.

Bevorzugt ist auch eine Variante, bei der die Automatisierungsvorrichtung Greifmittel aufweist, und die Greifmittel sowohl Werkstücke als auch Kennzeichnungselemente ergreifen, insbesondere wobei die Greifmittel die Werkstücke und die Kennzeichnungselemente jeweils ansaugen. Greifmittel sind universell einsetzbar und mechanisch schonend für die Werkstücke. Greifmittel werden typischerweise zum Stapeln von Werkstücken eingesetzt. Mit Sauggreifern können insbesondere Blechteile gut gehandhabt werden. Grundsätzlich werden dieselben Greifmittel für die Werkstücke und die Kennzeichnungselemente eingesetzt.

In einer anderen, bevorzugten Variante ist vorgesehen, dass die Automatisierungsvorrichtung einen Werkstückwagen umfasst, in den sowohl Werkstücke als auch Kennzeichnungselemente eingeworfen werden, insbesondere über einen Werkstücktrichter, und dass der Werkstückwagen zumindest über einem Teil der Werkstücksammeleinheiten verfährt und durch Öffnen eines Auswurfs die Werkstücke und die Kennzeichnungselemente über einer jeweiligen Werkstücksammeleinheit fallen lässt. Diese Variante ist mechanisch relativ einfach und daher kostengünstig; insbesondere braucht (neben Auswurfmechaniken) im Wesentlichen nur der Werkstückwagen bewegt zu werden, was meist mit einer einfachen linearen Achse erfolgen kann. Diese Variante eignet sich vor allem zur Bildung von Werkstückhaufen in Behältern.

Bevorzugt ist auch eine Variante, bei der als Kennzeichnungselement eine Karte, insbesondere eine Kunststoffkarte oder mit Kunststoff ummantelte Karte, eingesetzt wird. Bevorzugt weist die Karte wenigstens eine Fläche von 45 x 80 mm, bevorzugt wenigstens 50 mm x 90 mm auf. Die Karte ist deutlich schwerer als Papier bei gleicher Größe (Fläche), und geht entsprechend weniger leicht verloren. Die Karte ist typischerweise (reversibel) bedruckt und/oder enthält oder trägt einen RFID-Chip. Die Karte kann sowohl von einem Sauggreifer gehandhabt werden, als auch über Auswürfe und Werkstückwagen transportiert werden. Der Einsatz von Kunststoff ist kostengünstig und macht die Karte ausreichend robust für eine mehrfache Verwendung.

### Erfindungsgemäße Produktionsstation

In den Rahmen der vorliegenden Erfindung fällt auch eine Produktionsstation für Werkstücke, insbesondere zur Durchführung eines erfindungsgemäßen, oben beschriebenen Verfahrens, umfassend
- eine Produktionsmaschine zum Produzieren einer Vielzahl von Werkstücken,
- eine Automatisierungsvorrichtung zum Verbringen der von der Produktionsmaschine produzierten Werkstücke zu Bereitstellungsorten für Werkstücksammeleinheiten,
- eine Steuerungsvorrichtung zum Ansteuern der Automatisierungsvorrichtung, so dass die produzierten Werkstücke sortiert auf die Bereitstellungsorte verteilt werden,
- eine Vielzahl von Kennzeichnungselementen,
   die dadurch gekennzeichnet ist,
   dass die Produktionsstation weiterhin umfasst
- eine Bereitstellungsvorrichtung zum Bereitstellen von Kennzeichnungselementen, wobei die von der Bereitstellungsvorrichtung bereitgestellten Kennzeichnungselemente direkt und/oder indirekt Informationen über jeweils den Bereitstellungsorten zusortierte Werkstücke tragen, und
- eine Beförderungsvorrichtung zum Verbringen der mit der Bereitstellungsvorrichtung bereitgestellten Kennzeichnungselemente von der Bereitstellungsvorrichtung zu einer Übergabezone im Arbeitsbereich der Automatisierungsvorrichtung,
dass die Automatisierungsvorrichtung weiterhin ausgebildet ist zum Verbringen der bereitgestellten Kennzeichnungselemente von der Übergabezone zu den Bereitstellungsorten,
und dass die Steuerungsvorrichtung weiterhin ausgebildet ist zum Ansteuern der Automatisierungsvorrichtung, so dass die von der Bereitstellungsvorrichtung bereitgestellten Kennzeichnungselemente dem jeweiligen Bereitstellungsort der Werkstücke, über die sie direkt und/oder indirekt Informationen tragen, zusortiert werden. Mit der erfindungsgemäßen Produktionsstation können auf einfache und kostengünstige Weise Werkstücke gekennzeichnet werden. Die Produktionsstation kombiniert an einem Ort die Produktionsmaschine, die Bereitstellungsvorrichtung, die Beförderungsvorrichtung, die Steuerungsvorrichtung und die Automatisierungsvorrichtung. Die Automatisierungsvorrichtung kann sowohl für den Transport der Werkstücke (von der Produktionsmaschine bzw. einem zugehören Auswurfplatz, etwa an einem Werkstücktrichter, zum Bereitstellungsort bzw. einer dort angeordneten Werkstücksammeleinheit) als auch für den Transport des Kennzeichnungselements (von der Übergabezone zum Bereitstellungsort bzw. einer dort angeordneten Werkstücksammeleinheit) eingesetzt werden. Mittels der Steuerungsvorrichtung kann die korrekte Zusortierung sowohl der Werkstücke als auch der Kennzeichnungselemente zu den Bereitstellungsorten organisiert werden. Diese synergetische doppelte Nutzung ist besonders effizient. Meist sind an einer Produktionsstation wenigstens fünf Bereitstellungsorte für Werkstücksammeleinheiten im Arbeitsraum der Automatisierungsvorrichtung vorgesehen.

Bei einer bevorzugten Ausführungsform der erfindungsgemäßen Produktionsstation umfasst die Bereitstellungsvorrichtung eine Schreibvorrichtung zum Beschreiben der bereitzustellenden Kennzeichnungselemente direkt mit den Informationen der jeweils den Bereitstellungsorten zusortierten Werkstücke und/oder mit einer Zuordnungskennzeichnung für diese Informationen. Mittels der Schreibvorrichtung können auf einfache und zuverlässige Weise die Informationen selbst und/oder die Zuordnungskennzeichnung auf dem Kennzeichnungselement aufgebracht werden. Das Beschreiben kann dabei körperlich und/oder elektronisch erfolgen.

Bevorzugt ist weiterhin eine Ausführungsform, die vorsieht, dass die Bereitstellungsvorrichtung umfasst
- eine Lesevorrichtung zum Auslesen von in den bereitzustellenden Kennzeichnungselementen fest hinterlegten Zuordnungskennzeichnungen,
- oder eine Bestimmungsvorrichtung zur Bestimmung der Position eines bereitzustellenden Kennzeichnungselements bezüglich einer bekannten Ordnung, in der Kennzeichnungselemente in einem Vorrat gelagert sind, insbesondere wobei die Kennzeichnungselemente des Vorrats einen Stapel bilden und die Bestimmungsvorrichtung eine Zählvorrichtung für von dem Stapel genommene Kennzeichnungselemente umfasst. Dadurch ist es möglich, bereits vorhandene, fest hinterlegte (eindeutige) Zuordnungskennzeichnungen zu ermitteln und (nach Zuordnung zu den Informationen über die Werkstücke) zu nutzen; eine Schreibvorrichtung ist nicht erforderlich. Lesevorrichtung und Bestimmungsvorrichtung sind Beispiele für eine Erkennungsvorrichtung, mit der bereits vorhandene feste Zuordnungskennzeichnungen von bevorrateten Kennzeichnungselementen ermittelt werden können.

Vorteilhaft ist eine Ausführungsform einer erfindungsgemäßen Produktionsstation, bei der die Beförderungsvorrichtung eine Rutsche umfasst, über die die bereitgestellten Kennzeichnungselemente von der Bereitstellungsvorrichtung in die Übergabezone im Arbeitsbereich der Automatisierungsvorrichtung rutschen können. Die Rutsche ist ein besonders einfaches Mittel, um von der Bereitstellungsvorrichtung bereitgestellte Kennzeichnungselemente in den Arbeitsbereich der Automatisierungsvorrichtung zu leiten, so dass diese das Kennzeichnungselement zum Bereitstellungsort weiter transportieren kann. Insbesondere ist die Rutsche passiv und benötigt weder Energie noch eine Steuerung.

Bei einer bevorzugten Ausführungsform ist die Produktionsmaschine als eine Flachbettbearbeitungsmaschine oder Schneidmaschine, insbesondere Laserschneidmaschine, oder Stanzmaschine, oder eine kombinierte Schneid- und Stanzmaschine ausgebildet. Bei diesen Typen von Produktionsmaschinen werden aus einem Stück Rohmaterial (meist ein Metallblech) typischerweise mehrere verschiedene Typen von Werkstücken produziert, die dann an unterschiedlichen Werkstücksammeleinheiten gesammelt werden und unter Nutzung der Erfindung auf einfache Weise gekennzeichnet werden können.

Bei einer vorteilhaften Ausführungsform weisen die Kennzeichnungselemente jeweils einen RFID-Chip auf. Der RFID-Chip ist besonders leicht maschinell beschreibbar und auslesbar, insbesondere auch berührungslos und auf mittlere Entfernung (von bis zu einigen Metern). Dies erleichtert die Automatisierung von nachfolgenden Fertigungsprozessen mit den gekennzeichneten Werkstücken.

Bevorzugt ist auch eine Ausführungsform, die vorsieht, dass die Automatisierungsvorrichtung einen Sauggreifer aufweist, und dass die Kennzeichnungselemente einen ebenen Abschnitt zum Anlegen des Sauggreifers aufweisen, insbesondere wobei die Kennzeichnungselemente als Karten ausgebildet sind. Mit Sauggreifern kann eine vergleichsweise einfache und zuverlässige Handhabung der Werkstücke und Kennzeichnungselemente, insbesondere ohne Klemmachsen, erfolgen. Die Ausbildung eines ebenen Abschnitts am Kennzeichnungselement ist leicht möglich, wobei eine kompakte, flache Form der Kennzeichnungselemente eingerichtet werden kann, wie mit einer Karte.

Besonders bevorzugt ist eine Ausführungsform, bei der die Produktionsstation mehrere Werkstücksammeleinheiten umfasst, die jeweils an einem zugehörigen Bereitstellungsort angeordnet sind,
insbesondere wobei zumindest ein Teil der Werkstücksammeleinheiten als Palette und/oder Teilbereich einer Palette und/oder als Behälter für Werkstücke ausgebildet ist. Mittels der Werkstücksammeleinheiten können die dort jeweils abgelegten Werkstücke auf einfache Weise weiter gehandhabt werden, insbesondere mitsamt einer Palette oder einem Behälter zu einem Lager oder einer nächsten Fertigungsstation verfahren werden.

Eine vorteilhafte Weiterbildung dieser Ausführungsform sieht vor, dass die Produktionsstation wenigstens eine Werkstücksammeleinrichtung umfasst, die mehrere Werkstücksammeleinheiten umfasst, die über die Werkstücksammeleinrichtung gemeinsam transportierbar sind, insbesondere wobei die Werkstücksammeleinrichtung einen Rollwagen mit mehreren Behältern für Werkstücke und/oder Ablageplätzen für Stapel von Werkstücken, oder eine Palette mit mehreren Ablageplätzen für Stapel von Werkstücken umfasst. Mittels der Werkstücksammeleinrichtungen ist es möglich, eine größere Zahl von Werkstücksammeleinheiten auf einmal schnell auszutauschen, etwa wenn die Werkstücksammeleinheiten der Werkstücksammeleinrichtung voll sind.

### Erfindungsgemäßes Nachrüstverfahren

Ebenfalls in den Rahmen der vorliegenden Erfindung fällt ein Verfahren zum Aufrüsten einer Produktionsmaschine zum Produzieren einer Vielzahl von Werkstücken,
wobei die Produktionsmaschine eine Automatisierungsvorrichtung zum Verbringen der von der Produktionsmaschine produzierten Werkstücke zu Bereitstellungsorten für Werkstücksammeleinheiten und eine Steuerungsvorrichtung zum Ansteuern der Automatisierungsvorrichtung, so dass die produzierten Werkstücke sortiert auf die Bereitstellungsorte verteilt werden, aufweist,
zu einer oben beschriebenen, erfindungsgemäßen Produktionsstation, mit den Verfahrensschritten:
- Bereitstellen einer Bereitstellungsvorrichtung zum Bereitstellen von Kennzeichnungselementen, wobei die von der Bereitstellungsvorrichtung bereitgestellten Kennzeichnungselemente direkt und/oder indirekt Informationen über jeweils den Bereitstellungsorten zusortierte Werkstücke tragen, und
- Bereitstellen einer Beförderungsvorrichtung zum Verbringen der mit der Bereitstellungsvorrichtung bereitgestellten Kennzeichnungselemente von der Bereitstellungsvorrichtung zu einer Übergabezone im Arbeitsbereich der Automatisierungsvorrichtung, so dass die Automatisierungsvorrichtung die bereitgestellten Kennzeichnungselemente von der Übergabezone zu den Bereitstellungsorten verbringen kann, und
- Programmieren der Steuerungsvorrichtung zum Ansteuern der Automatisierungsvorrichtung, so dass die von der Bereitstellungsvorrichtung bereitgestellten Kennzeichnungselemente dem jeweiligen Bereitstellungsort der Werkstücke, über die sie direkt und/oder indirekt Informationen tragen, zusortiert werden. Im Rahmen des erfindungsgemäßen Nachrüstverfahrens können vorhandene Produktionsmaschine-/Automatisierungsvorrichtung-Kombinationen auf kostengünstige Weise für das Kennzeichnen von Werkstücken gemäß der Erfindung ertüchtigt werden. Die Bereitstellungsvorrichtung und die Beförderungsvorrichtung sind in der Regel relativ kostengünstig (im Vergleich zu den Anschaffungskosten einer Produktionsmaschine oder einer Automatisierungsvorrichtung), und der Umprogrammieraufwand der Steuerungsvorrichtung ist gering, da die Steuerungsvorrichtung bereits für die Sortierung der Werkstücke eingerichtet ist.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Darstellung einer ersten erfindungsgemäßen Produktionsstation, auf der eine erste Variante eines erfindungsgemäßen Verfahrens ablauft, mit einer als Laserschneidmaschine ausgebildeten Produktionsmaschine, wobei die produzierten Werkstücke gestapelt werden;
- Fig. 2: eine schematische Darstellung einer ersten erfindungsgemäßen Produktionsstation, auf der eine zweite Variante eines erfindungsgemäßen Verfahrens ablauft, mit einer als Stanzmaschine ausgebildeten Produktionsmaschine, wobei die produzierten Werkstücke in Behälter abgeworfen werden;
- Fig. 3: eine schematische, teilweise transparente Ansicht eines bedruckten Kennzeichnungselements für die Erfindung;
- Fig. 4: eine schematische, teilweise transparente Ansicht eines Kennzeichnungselements mit E-Ink-Anzeige für die Erfindung;
- Fig. 5: eine schematische Darstellung einer Bereitstellungsvorrichtung für die Erfindung, die mit einer Lesevorrichtung oder einer Zählvorrichtung ausgebildet ist.

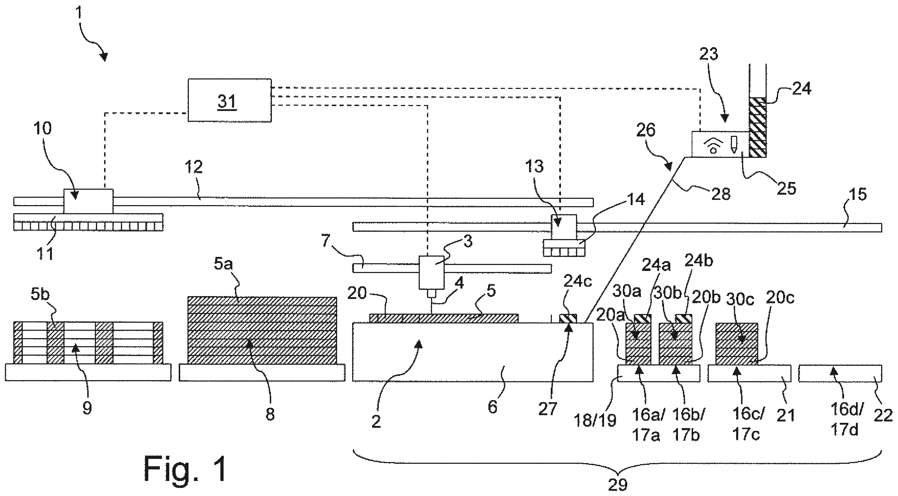

Die **Fig. 1** zeigt in einer schematischen Darstellung eine erste Ausführungsform einer erfindungsgemäßen Produktionsstation 1 zur Durchführung des erfindungsgemäßen Verfahrens.

Die Produktionsstation 1 umfasst eine Produktionsmaschine 2, hier eine Laserschneidmaschine mit einem Laserbearbeitungskopf 3. Der Laserbearbeitungskopf 3 emittiert während einer Laserbearbeitung einen Laserstrahl 4, der hier vertikal nach unten auf ein zu schneidendes Stück Rohmaterial 5 auf einem Tisch 6 gerichtet ist. Der Laserbearbeitungskopf 3 ist hier oberhalb des Tischs 6 mit einem Portalsystem 7 in einer horizontalen Ebene verfahrbar, um gewünschte Schneidkonturen von zu fertigenden Werkstücken 20 abzufahren. Alternativ könnte auch ein Oberteil des Tischs 6 zusammen mit dem Stück Rohmaterial 5 in einer horizontalen Ebene verfahrbar ausgebildet sein.

Noch ungeschnittene Stücke Rohmaterial 5a werden auf einem Rohmaterial-Stapel 8 neben dem Tisch 6 gelagert. Weiterhin werden Reststücke von Rohmaterial 5b, die nach dem Ausschneiden aller gewünschten Werkstücke verblieben sind, auf einem Restmaterial-Stapel 9 ebenfalls neben dem Tisch 6 gelagert. Mittels einer Ladevorrichtung 10 können ungeschnittene Stücke Rohmaterial 5a vom Rohmaterial-Stapel 8 auf den Tisch 6 verbracht werden, und Reststücke von Rohmaterial 5b vom Tisch 6 auf den Restmaterial-Stapel 9 verbracht werden. Die Ladevorrichtung 10 ist hier mit einem Sauggreifer 11, der mit einem Portalsystem 12 in einer horizontalen Ebene und auch vertikal verfahren werden kann, ausgebildet.

Mittels einer Automatisierungsvorrichtung 13 können weiterhin die geschnittenen Werkstücke 20 vom Tisch 6 zu Bereitstellungsorten 16a-16d transportiert werden, die neben dem Tisch 6 eingerichtet sind. Die Automatisierungsvorrichtung 13 verfügt dafür über einen Sauggreifer 14, der mittels eines Portalsystems 15 in einer horizontalen Ebene und auch in vertikaler Richtung verfahrbar ist.

Man beachte, dass die Automatisierungsvorrichtung 13 als Teil der Produktionsmaschine 2 aufgefasst werden kann. Entsprechendes gilt für die Ladevorrichtung 10.

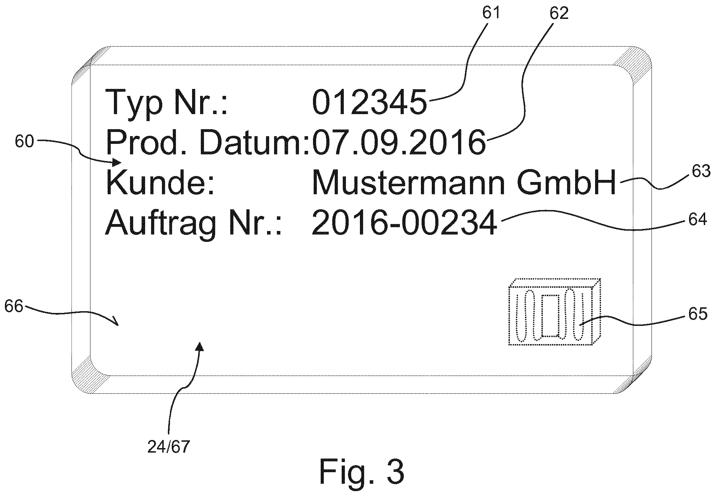

An den Bereitstellungsorten 16a-16d sind Werkstücksammeleinheiten 17a-17d angeordnet. Die Werkstücksammeleinheit 17a ist hier als der linke Teilbereich einer Palette 18 ausgebildet, wo ein erster Typ von Werkstücken 20a gestapelt wird. Die Werkstücksammeleinheit 17b ist als der rechte Teilbereich der Palette 18 ausgebildet, wo ein zweiter Typ von Werkstücken 20b gestapelt wird. Die Palette 18 ist damit eine Werkstücksammeleinrichtung 19, auf der zwei Werkstücksammeleinheiten 17a, 17b ausgebildet sind. Die Werkstücksammeleinheit 17c ist als eine Palette 21 ausgebildet, auf der (nur) ein dritter Typ von Werkstücken 20c gestapelt wird. Die Werkstücksammeleinheit 17d ist ebenfalls mit einer Palette 22 ausgebildet, auf der aber bisher noch keine Werkstücke 20 angeordnet wurden. Man beachte, dass hier zur Vereinfachung nur vier Bereitstellungsorte 16a-16d eingezeichnet sind; in der Praxis sind meist wenigstens fünf Bereitstellungsorte eingerichtet. Die Produktionsstation 1 verfügt weiterhin über eine Bereitstellungsvorrichtung 23, an der dort bevorratete Kennzeichnungselemente 24 in der gezeigten Ausführungsform mit direkten Informationen (etwa einer Auftragsnummer, einem Teiletyp und einer Produktionszeit) jeweils über die Werkstücke 20a, 20b, 20c auf den Werkstücksammeleinheiten 17a, 17b, 17c beschrieben werden; die Bereitstellungsvorrichtung 23 umfasst hierfür eine Schreibvorrichtung 25. Die Schreibvorrichtung 25 bringt hier einen Aufdruck auf den Kennzeichnungselementen 24 an, und programmiert weiterhin RFID-Chips der Kennzeichnungselemente 24 (nicht näher dargestellt, vgl. aber hierzu Fig. 3). Die Bereitstellungsvorrichtung 23 beschreibt also ein Kennzeichnungselement 24 hier sowohl körperlich als auch elektronisch.

Die Bereitstellungsvorrichtung 23 ist über eine Beförderungsvorrichtung 26 an die Automatisierungsvorrichtung 13 gekoppelt. Bereitgestellte Kennzeichnungselemente 24 werden von der Bereitstellungsvorrichtung 23 ausgeworfen und rutschen über eine Rutsche 28 der Beförderungsvorrichtung 26 in eine Übergabezone 27, die innerhalb des Arbeitsraums 29 der Automatisierungsvorrichtung 13, also des hier für den Sauggreifer 13 erreichbaren Raumes, liegt. Vorliegend ist das Kennzeichnungselement 24c bereits in die Übergabezone 27 gerutscht. Mit der Automatisierungsvorrichtung 13 kann nun das Kennzeichnungselement 24c zu seinem zugehörigen Stapel 30c von Werkstücken 20c verbracht werden, und auf den Stapel 30c aufgelegt werden. Man beachte, dass auf den Stapeln 30a und 30b von Werkstücken 20a, 20b bereits auf diese Weise Kennzeichnungselemente 24a, 24b abgelegt wurden.

Nachdem die Stapel 30a, 30b, 30c von Werkstücken 20a, 20b, 20c vollständig gebildet wurden und auch die Kennzeichnungselemente 24a, 24b, 24c auf ihnen abgelegt wurden, werden die Werkstücksammeleinheiten 17a, 17b, 17c bzw. die Paletten 18, 21 gegen leere Werkstücksammeleinheiten bzw. leere Paletten getauscht (nicht näher dargestellt); die Paletten 18, 21 können in üblicher Weise hierzu gehandhabt werden, etwa mit einem Gabelstapler. Man beachte, dass mittels der Palette 18 hier gleichzeitig die beiden Stapel 30a und 30b gehandhabt werden können.

Die Ladevorrichtung 10, die Produktionsmaschine 2, die Automatisierungsvorrichtung 13 und die Bereitstellungsvorrichtung 23 werden dabei von einer Steuerungsvorrichtung 31 koordiniert (Soweit auch die Beförderungsvorrichtung 26 in anderen Ausführungsformen eine Ansteuerung benötigen sollte, kann auch die Beförderungsvorrichtung 26 von der Steuerungsvorrichtung 31 koordiniert werden). Die Steuerungsvorrichtung 31 legt insbesondere fest, wie die Werkstücke 20, 20a, 20b, 20c den Bereitstellungsorten 16a-16d zusortiert werden, und sorgt auch für die korrekte Zuordnung der Kennzeichnungselemente 24a, 24b, 24c. Die Steuerungsvorrichtung 31 stellt hier auch die werkstückbezogenen Informationen bereit, die von der Bereitstellungsvorrichtung 23 auf ein Kennzeichnungselement 24, 24a, 24b, 24c geschrieben werden und/oder diesen zugeordnet werden.

Man beachte, dass mittels der Bereitstellungsvorrichtung 23 bzw. der Schreibvorrichtung 25 anstelle oder zusätzlich zu den unmittelbaren Informationen über die Werkstücke auch eine Zuordnungskennzeichnung auf ein jeweiliges Kennzeichnungselement 24 geschrieben werden kann.

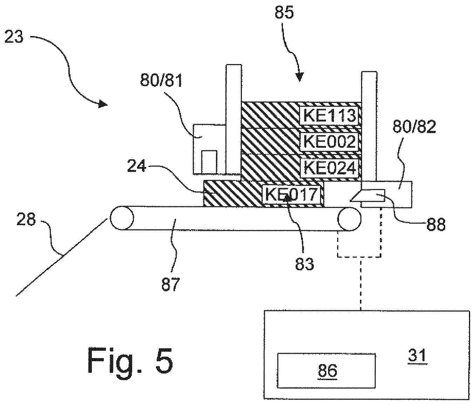

Die Bereitstellungsvorrichtung 23 kann auch dazu ausgestaltet sein, eine jeweilige bereits auf den bevorrateten Kennzeichnungselementen 24 (körperlich und/oder elektronisch) fest abgelegte, eindeutige Zuordnungskennzeichnung 83 zu ermitteln, vgl. **Fig. 5****,** etwa durch Auslesen oder Abzählen. Die Bereitstellungsvorrichtung 23 umfasst dann eine Ermittlungsvorrichtung 80, typischerweise in Gestalt einer Lesevorrichtung 81, die die Zuordnungskennzeichnungen 83 von bereitgestellten Kennzeichenelementen 24 hier beim Herausfahren auf einem Förderband 87 ausliest. Die Ermittlungsvorrichtung 80 kann auch in Gestalt einer Zählvorrichtung 82 (hier ausgebildet mit einem Drucktaster 88) ausgebildet sein, die mitzählt, welches Kennzeichnungselement 24 aus dem bevorrateten Stapel 85 von Kennzeichnungselementen 24 gerade herausgefahren wird, wobei die Abfolge von Zuordnungskennzeichnungen 83 im Stapel 85 bekannt ist. Die Bereitstellungsvorrichtung 23 kann auch mit einer Kombination aus einer Ermittlungsvorrichtung 80 und einer Schreibvorrichtung ausgestaltet sein (nicht dargestellt).

Die ermittelte Zuordnungskennzeichnung 83 wird in einer Datenbank 86 den Informationen über die Werkstücke auf der zugewiesenen Werkstücksammeleinheit zugeordnet, so dass diese Informationen mittels der Zuordnungskennzeichnung 83 leicht auffindbar bzw. abrufbar sind. Das Kennzeichnungselement 24 ruft dann typischerweise unmittelbar anschließend die eigentlichen Informationen über die Werkstücke mittels der Zuordnungskennzeichnung 83 aus der Datenbank 86 drahtlos ab. Ebenso können die eigentlichen Informationen später von Maschinen oder Menschen bei Bedarf mittels der Zuordnungskennzeichnung 83 abgerufen werden. Die Datenbank 86 kann zur Steuerung 31 gehören (wie dargestellt) oder als eine externe Datenbank ausgebildet sein. Entsprechendes gilt für den Fall einer mittels einer Schreibvorrichtung 25 einer Bereitstellungsvorrichtung 23 auf einem Kennzeichnungselement 24 aufgebrachten Zuordnungskennzeichnung 83 (vgl. Fig. 1).

Eine erfindungsgemäße Produktionsstation 1, wie in Fig. 1 dargestellt, kann insbesondere dadurch eingerichtet werden, dass eine vorhandene Produktionsanlage, die eine Produktionsmaschine 2, eine Ladevorrichtung 10, eine Automatisierungsvorrichtung 13 und eine Steuerungsvorrichtung 31 umfasst, mit einer Bereitstellungsvorrichtung 23 und einer Beförderungsvorrichtung 26 mit Übergabezone 27 im Arbeitsraum der Automatisierungsvorrichtung 13 nachgerüstet wird, und die Steuerungsvorrichtung 31 so umprogrammiert wird, dass sie auch die Zusortierung der Kennzeichnungselemente 24 mit übernimmt.

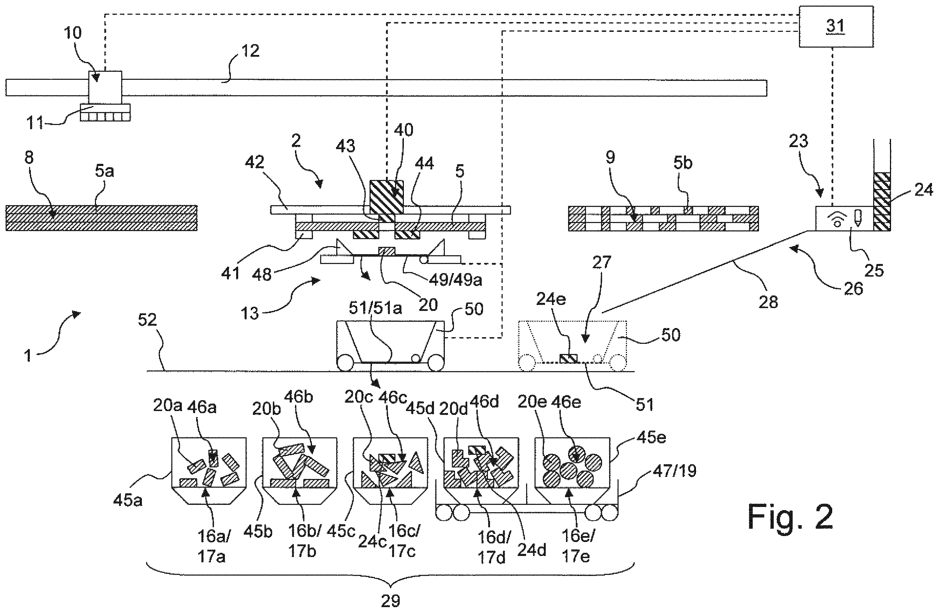

Die **Fig. 2** zeigt eine weitere Ausführungsform einer erfindungsgemäßen Produktionsstation 1. Die Funktionsweise ist ähnlich zur Ausführungsform von Fig. 1, so dass nachfolgend vor allem die wesentlichen Unterschiede erläutert werden.

Bei der Produktionsstation 1 ist die Produktionsmaschine 2 als eine Stanzmaschine mit einem Stanzkopf 40 ausgebildet, mit dem Werkstücke 20 aus einem zu stanzenden Stück Rohmaterial 5 herausgestanzt werden können. Um das Stück Rohmaterial 5 für das Ausstanzen verschiedener Werkstücke 20 zu positionieren, ist das Stück Rohmaterial 5 mit einer Klemmvorrichtung 41 gehalten, die über ein Portalsystem 42 in einer horizontalen Ebene verfahren werden kann; zusätzlich kann das Stück Rohmaterial 5 auf einem Tisch gleitend abgestützt sein (nicht näher dargestellt). Das Stanzwerkzeug 43 und Stanzmatrize 44 der Stanzmaschine können für verschiedene Typen von zu stanzenden Werkstücken 20 getauscht werden (nicht näher dargestellt).

Mittels der Ladevorrichtung 10 können ungestanzte Stücken von Rohmaterial 5a vom Rohmaterial-Stapel 8 zur Klemmvorrichtung 41 verbracht werden, und Reststücke von Rohmaterial 5b können von der Klemmvorrichtung 41 zum Restmaterial-Stapel 9 verbracht werden.

Ausgestanzte Werkstücke 20 werden über die Automatisierungsvorrichtung 13 zu hier fünf Werkstücksammeleinrichtungen 17a-17e an Bereitstellungsorten 16a-16e verbracht, wobei die Werkstücksammeleinheiten 17a-17e hier als Behälter 45a-45e ausgebildet sind. Die Werkstücke 20a-20e in den Behältern 45a-45e bilden jeweils Haufen (Schüttungen) 46a-46e aus. Die Behälter 45d und 45e sind hier auf einem Rollwagen 47 angeordnet. Der Rollwagen 47 stellt somit eine Werkstücksammeleinrichtung 19 mit zwei Werkstücksammeleinheiten 17d, 17e dar.

Die Automatisierungsvorrichtung 13 weist hier einen Werkstücktrichter 48 auf, der einen bodenseitigen, mit einer Klappe 49a ausgebildeten Auswurf 49 ausbildet. Ein ausgestanztes Werkstück 20 bleibt zunächst auf der geschlossenen Klappe 49a liegen. Wenn ein Werkstückwagen 50 unterhalb des Auswurfs 49 positioniert ist, kann der Auswurf 49 geöffnet werden, und das Werkstück 20 (ggf. auch mehrere Werkstücke) fällt in den Werkstückwagen 50. Der Werkstückwagen 50 ist wiederum mit einem bodenseitigen, mit einer Klappe 51a ausgebildeten Auswurf 51 versehen. Der Werkstückwagen 50 ist oberhalb der Bereitstellungsorte 16a-16e bzw. der Werkstücksammeleinheiten 17a-17e auf einer hier horizontal verlaufenden Führung 52 verfahrbar, und kann über einem ausgewählten Bereitstellungsort 16a-16e positioniert werden. Sodann kann der Auswurf 51 geöffnet werden, und das Werkstück 20 (oder die Werkstücke) aus dem Werkstückwagen 50 fallen in den darunter stehenden Behälter 45a-45e am ausgewählten Bereitstellungsort 16a-16e. Vorliegend ist der Rollwagen 50 (in der nicht gepunkteten Darstellung) für eine Entgegennahme von Werkstücken 20 aus dem Werkstücktrichter 48, und auch für ein Fallenlasen von Werkstücken 20 in den mittleren Behälter 45c positioniert.

In einer hier äußerst rechten (gepunktet dargestellten) Verfahrposition des Werkstückwagens 50 kann ein Kennzeichnungselement 24, das hier in der Bereitstellungssvorrichtung 23 umfassend eine Schreibvorrichtung 25 mit direkten Informationen über die Werkstücke 20a-20e einer Werkstücksammeleinheit 17a-17e und/oder mit einer individuellen (einmalig vergebenen) Zuordnungskennzeichnung für diese Informationen beschrieben wurde, über die Rutsche 28 der Beförderungsvorrichtung 26 in den Werkstückwagen 50 rutschen. Das Innere des Werkstückwagens 50, wenn dieser an der hier äußerst rechten Position der Führung 52 angeordnet ist, bildet hier eine Übergabezone 27 für die Kennzeichnungselemente 24 im Arbeitsbereich 29 der Automatisierungsvorrichtung 13 aus. Mit dem Werkstückwagen 50 kann dann ein Kennzeichnungselement 24e über einen gewünschten Behälter 45a-45e gefahren werden, und durch Öffnen des Auswurfs 51 in diesen fallengelassen werden. Um hier das Kennzeichnungselement 24e in die zugehörige Werkstücksammeleinheit 17e fallen zu lassen, braucht der Werkstückwagen 50 nicht verfahren zu werden. Man beachte, dass hier bereits in die Behälter 45c und 45d Kennzeichnungselemente 24c, 24d zusortiert wurden.

Man beachte, dass die Rutsche 28 alternativ auch so eingerichtet werden kann, dass ein herabrutschendes Kennzeichnungselement 24 in den Werkstücktrichter 48 fällt (nicht dargestellt).

Die Steuervorrichtung 31 koordiniert wiederum die Ladevorrichtung 10, die Produktionsmaschine 2, die Automatisierungsvorrichtung 13 und die Bereitstellungsvorrichtung 23, um das Herstellen und Zusortieren der Werkstücke 20, 20a-20e und das Beschreiben bzw. Zuordnen und Zusortieren der Kennzeichnungselemente 24, 24c-24e zu bewirken. Die Automatisierungsvorrichtung 13 muss hier sowohl bezüglich der Verfahrposition des Werkstückwagens 50 als auch bezüglich des Öffnens (und Schließens) der Auswürfe 49, 51 angesteuert werden.

Die **Fig. 3** zeigt beispielhaft ein von einer Bereitstellungsvorrichtung bereitgestelltes Kennzeichnungselement 24 für die Erfindung. Das Kennzeichnungselement 24 ist hier als eine Karte 67 aus Kunststoff ausgebildet, hier mit ca. einer Länge von 90 mm, einer Breite von 50 mm und einer Dicke von 4 mm. Man beachte, dass die Dicke der Karte 67 meistens 1/10 oder weniger sowohl der Länge als auch der Breite der Karte 67 beträgt. In vielen Fällen kann auch eine Dicke der Karte 67 von 1,5 mm oder weniger eingerichtet werden. Meist ist die Karte 67 aber wenigstens 0,6 mm oder wenigstens 1,0 mm dick.

In der illustrierten Variante ist das Kennzeichnungselement 24 auf der Oberseite mit direkten Informationen 60 über die Werkstücke auf einer Werkstücksammeleinheit, der das Kennzeichnungselement 24 zugeordnet ist bzw. wird, von der Bereitstellungsvorrichtung bedruckt worden. Das Kennzeichnungselement 24 wird im Rahmen der Erfindung mit der Automatisierungsvorrichtung für die Werkstücke bei den Werkstücken auf der zugehörigen Werkstücksammeleinheit angeordnet.

Die aufgedruckten Informationen 60 umfassen hier eine Typennummer der Werkstücke 61, ein Produktionsdatum der Werkstücke 62, einen Namen eines auftraggebenden Kunden 63 sowie eine Auftragsnummer 64. Die aufgedruckten Informationen 60 sind für einen Menschen mit bloßem Auge gut lesbar.

Weiterhin ist hier in das Kennzeichnungselement 24, also in die Karte 67 aus Kunststoff, ein RFID-Chip 65 eingeschweißt. Der RFID-Chip 65 kann alternativ auch anderweitig am Kennzeichnungselement 24 befestigt werden, etwa aufgeklebt werden. Der RFID-Chip 65 wurde mit der Bereitstellungsvorrichtung hier mit denselben Informationen 60 über die Werkstücke auf der zugehörigen Werkstücksammeleinrichtung beschrieben (programmiert) wie bei der Bedruckung, so dass diese direkten Informationen 60 auch für ein maschinelles Auslesen, hier sogar ein berührungsloses Auslesen, mit einem RFID-Lesegerät zur Verfügung stehen.

Falls gewünscht, können die Informationen auf dem RFID-Chip 65 auch über die Informationen 60 der Bedruckung hinausgehen, und beispielsweise noch Angaben zu der bei der Fertigung der Werkstücke eingesetzten Produktionsstation enthalten.

Die Oberseite des Kennzeichnungselements 24 stellt einen ebenen Abschnitt 66 dar, an dem ein Sauggreifer zum Ergreifen und Transportieren des Kennzeichnungselements 24 angreifen kann. Entsprechendes gilt für die Unterseite.

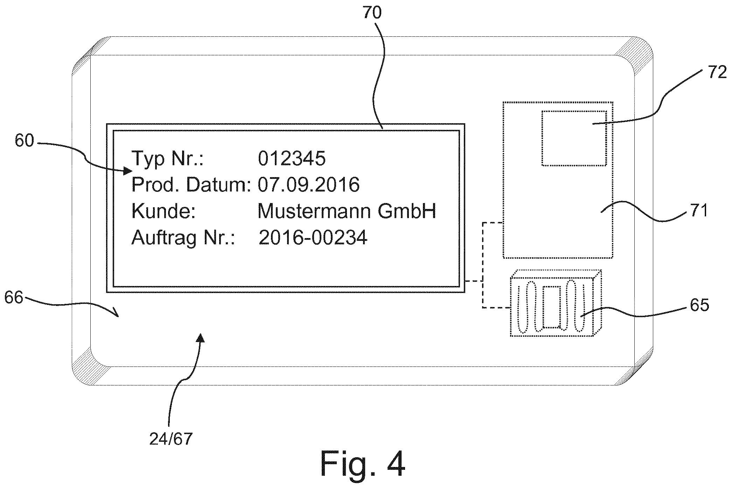

Alternativ kann das Kennzeichnungselement 24 auch eine Karte 67 mit einer elektronische veränderbaren Anzeige 70 für die Darstellung der Informationen 60 sein, vgl. **Fig. 4****.** Besonders sparsam im Leistungsverbrauch sind solche Karten 67, die als Anzeige 70 ein sogenanntes E-Papier (E-Ink) verwenden. Dies wird über eine Steuerungsmodul 71 des Kennzeichnungselements 24 angesteuert, das die Anzeige 70 verändern kann. Die dann statische Anzeige 70 selbst verbraucht keine elektrische Leistung. Das Steuerungsmodul 71 kann einen Empfänger 72 aufweisen, der elektromagnetische Signale wie z.B. Funkwellen, Licht oder Infrarot empfängt. Mit den elektromagnetischen Signalen können die Informationen 60 dem Steuerungsmodul 71 insbesondere drahtlos überbracht (übermittelt) werden. Dieses kann die Informationen 60 für Menschen lesbar auf der E-Ink Anzeige 70 darstellen. Die Übermittlung der (direkten) Informationen 60 über die Werkstücke an das Kennzeichnungselement 24 kann in der Bereitstellungsvorrichtung erfolgen. Alternativ kann die Übermittlung der (direkten) Informationen 60 aber auch später, etwa in einer Werkhalle, über ein geeignetes Sendemodul (nicht dargestellt) erfolgen. Dabei kann eine eindeutige Zuordnung der Kennzeichnungselemente 24 mittels einer Zuordnungskennzeichnung

(beispielsweise niedergelegt auf dem RFID-Chip 65) zu den zugehörigen Werkstücksammeleinheiten bzw. den entsprechenden Informationen 60 über die dortigen Werkstücke erfolgen. Eine solches Kennzeichnungselement 24 zeichnet sich durch eine sehr hohe Flexibilität aus.

Die beschriebenen Verfahren und Vorrichtungen sind insbesondere geeignet für biegefeste Werkstücke 20, 20a-e, so dass die hierin offenbarten Konzepte und deren Anwendung in den hierin beschriebenen Vorrichtungen auch besonders geeignet für das Kennzeichnen von biegefesten Werkstücken sein können. Ein biegefestes Werkstück kann beispielsweise aus Blech, Glas oder Kunststoff sein. Ferner sind aus einem Halbleitersubstrat oder einer Leiterplatte geschnittene (oder gestanzte) Teile oft biegefest.

### Bezugszeichenliste

- 1: Produktionsstation
- 2: Produktionsmaschine
- 3: Laserbearbeitungskopf
- 4: Laserstrahl
- 5: Stück Rohmaterial (in Bearbeitung)
- 5a: Stück Rohmaterial (unbearbeitet)
- 5b: Stück Rohmaterial (Reststück)
- 6: Tisch
- 7: Portalsystem (für Laserbearbeitungskopf)
- 8: Rohmaterial-Stapel
- 9: Restmaterial-Stapel
- 10: Ladevorrichtung
- 11: Sauggreifer (für Ladevorrichtung)
- 12: Portalsystem (für Ladevorrichtung)
- 13: Automatisierungsvorrichtung
- 14: Sauggreifer (für Automatisierungsvorrichtung)
- 15: Portalsystem (für Automatisierungsvorrichtung)
- 16a-16e: Bereitstellungsorte
- 17a-17e: Werkstücksammeleinheiten
- 18, 21, 22: Palette
- 19: Werkstücksammeleinrichtung
- 20, 20a-20e: Werkstücke
- 23: Bereitstellungsvorrichtung
- 24, 24a-24e: Kennzeichnungselemente
- 25: Schreibvorrichtung
- 26: Beförderungsvorrichtung
- 27: Übergabezone
- 28: Rutsche
- 29: Arbeitsbereich
- 30a-30c: Stapel von Werkstücken
- 31: Steuerungsvorrichtung
- 40: Stanzkopf
- 41: Klemmvorrichtung
- 42: Portalsystem (für Klemmvorrichtung)
- 43: Stanzwerkzeug
- 44: Stanzmatrize
- 45a-45e: Behälter
- 46a-46e: Haufen
- 47: Rollwagen
- 48: Werkstücktrichter
- 49: Auswurf
- 49a: Klappe
- 50: Werkstückwagen
- 51: Auswurf
- 51a: Klappe
- 52: Führung
- 60: Informationen
- 61: Typennummer der Werkstücke
- 62: Produktionsdatum der Werkstücke
- 63: auftraggebender Kunde
- 64: Auftragsnummer
- 65: RFID-Chip
- 66: ebener Abschnitt
- 67: Karte
- 70: elektronisch veränderbare Anzeige
- 71: Steuermodul
- 72: Empfänger
- 80: Ermittlungsvorrichtung
- 81: Lesevorrichtung
- 82: Zählvorrichtung
- 83: Zuordnungskennzeichnung
- 85: Stapel (bevorratete Kennzeichnungselemente)
- 86: Datenbank
- 87: Förderband
- 88: Druckschalter

## Patentansprüche

1. Verfahren zur Kennzeichnung von Werkstücken (20, 20a-20e), wobei eine Produktionsmaschine (2) eine Vielzahl von Werkstücken (20, 20a-20e) produziert und die produzierten Werkstücke (20, 20a-20e) sortiert auf mehrere Werkstücksammeleinheiten (17a-17e) verteilt werden,
wobei die produzierten Werkstücke (20, 20a-20e) mit einer Automatisierungsvorrichtung (13) zu den Werkstücksammeleinheiten (17a-17e) verbracht werden,
und wobei auf den Werkstücksammeleinheiten (17a-17e) Kennzeichnungselemente (24, 24a-24e) angeordnet werden, die jeweils direkt und/oder indirekt Informationen (60) über die Werkstücke (20, 20a-20e) auf den Werkstücksammeleinheiten (17a-17e) tragen,
**dadurch gekennzeichnet,**
**dass** die von einer Bereitstellungsvorrichtung (23) bereitgestellten Kennzeichnungselemente (24, 24a-24e), die jeweils direkt und/oder indirekt Informationen (60) über die Werkstücke (20, 20a-20e) auf den
Werkstücksammeleinheiten (17a-17e) tragen, mittels einer Beförderungsvorrichtung (26) vom Ort der
Bereitstellungsvorrichtung (23) an eine Übergabezone (27) im Arbeitsbereich (29) der Automatisierungsvorrichtung (13) verbracht werden,
und **dass** die Automatisierungsvorrichtung (13) ein jeweiliges bereitgestelltes Kennzeichnungselement (24, 24a-24e) von der Übergabezone (27) zur zugehörigen Werkstücksammeleinheit (17a-17e) verbringt.

2. Verfahren nach Anspruch 1, **dadurch gekennzeichnet, dass** die Bereitstellungsvorrichtung (23) die bereitzustellenden Kennzeichnungselemente (24, 24a-24e) jeweils direkt mit den Informationen (60) über die Werkstücke (20, 20a-20e) beschreibt.

3. Verfahren nach einem der vorhergehenden Ansprüche, **dadurch gekennzeichnet,**
**dass** die von der Bereitstellungsvorrichtung (23) bereitgestellten Kennzeichnungselemente (24, 24a-24e) jeweils eine individuelle Zuordnungskennzeichnung (83) tragen,
und **dass** in einer Datenbank (86) den Zuordnungskennzeichnungen (83) der bereitgestellten oder bereitzustellenden Kennzeichnungselemente (24, 24a-24e) jeweils die Informationen (60) über die Werkstücke (20, 20a-20e) auf den Werkstücksammeleinheiten (17a-17e) zugeordnet werden.

4. Verfahren nach Anspruch 3, **dadurch gekennzeichnet, dass** die bereitzustellenden Kennzeichnungselemente (24, 24a-24e) von der Bereitstellungvorrichtung (23) jeweils mit einer Zuordnungskennzeichnung (83) beschrieben werden.

5. Verfahren nach Anspruch 3, **dadurch gekennzeichnet, dass** mittels der Bereitstellungsvorrichtung (23) jeweils eine auf den bereitzustellenden Kennzeichnungselementen (24, 24a-24e) fest hinterlegte Zuordnungskennzeichnung (83) ausgelesen wird.

6. Verfahren nach Anspruch 3, **dadurch gekennzeichnet,**
**dass** die Bereitstellungsvorrichtung (23) die bereitzustellenden Kennzeichnungselemente (24, 24a-24e) einem Vorrat entnimmt, in welchem Kennzeichnungselemente (24, 24a-24e) mit bekannten, fest hinterlegten Zuordnungskennzeichnungen (83) in einer bekannten Ordnung gelagert sind, insbesondere wobei die Kennzeichnungselemente (24, 24a-24e) des Vorrats einen Stapel (85) bilden,
und **dass** eine Zuordnungskennzeichnung (83) für ein bereitzustellendes Kennzeichnungselement (24, 24a-24e) mittels einer Entnahmeinformation ermittelt wird, wobei die Entnahmeinformation die Position des bereitzustellenden Kennzeichnungselements (24, 24a-24e) bezüglich der bekannten Ordnung beschreibt, insbesondere wobei die Entnahmeinformation ein Zählindex der von dem Stapel (85) genommenen Kennzeichnungselemente (24, 24a-24e) ist.

7. Verfahren nach einem der vorhergehenden Ansprüche, **dadurch gekennzeichnet, dass** die Bereitstellungsvorrichtung (23) das Kennzeichnungselement (24, 24a-24e) sowohl maschinenlesbar als auch für Menschen lesbar beschreibt.

8. Verfahren nach einem der vorhergehenden Ansprüche, **dadurch gekennzeichnet, dass** die Bereitstellungsvorrichtung (23) das Kennzeichnungselement (24, 24a-24e) reversibel beschreibt.

9. Verfahren nach einem der vorhergehenden Ansprüche, **dadurch gekennzeichnet, dass** die Bereitstellungsvorrichtung (23) einen RFID-Chip (65) des Kennzeichnungselements (24, 24a-24e) programmiert.

10. Verfahren nach einem der vorhergehenden Ansprüche, **dadurch gekennzeichnet, dass** die Bereitstellungsvorrichtung (23) das Kennzeichnungselement (24, 24a-24e) bedruckt.

11. Verfahren nach einem der vorhergehenden Ansprüche, **dadurch gekennzeichnet, dass** die Automatisierungsvorrichtung (13) zumindest auf einem Teil der Werkstücksammeleinheiten (17a-17e) jeweils einen Stapel (30a-30c) von Werkstücken (20, 20a-20e) bildet und ein Kennzeichnungselement (24, 24a-24e) oben auf oder neben dem Stapel (30a-30c) von Werkstücken (20, 20a-20e) ablegt,
insbesondere wobei zumindest ein Teil der Werkstücksammeleinheiten (17a-17e) jeweils eine Palette (18, 21, 22) oder einen Teilbereich einer Palette (18, 21, 22) umfasst, auf der oder dem jeweils der Stapel (30a-30c) gebildet wird.

12. Verfahren nach einem der vorhergehenden Ansprüche, **dadurch gekennzeichnet, dass** die Automatisierungsvorrichtung (13) zumindest auf einem Teil der Werkstücksammeleinheiten (17a-17e) jeweils einen Haufen (46a-46e) von Werkstücken (20, 20a-20e) bildet und ein Kennzeichnungselement (24, 24a-24e) oben auf oder neben den Haufen (46a-46e) von Werkstücken (20, 20a-20e) ablegt,
insbesondere wobei zumindest ein Teil der Werkstücksammeleinheiten (17a-17e) einen Behälter (45a-45e), bevorzugt einen verschließbaren Behälter (45a-45e), umfasst, in welchem der Haufen (46a-46e) gebildet wird.

13. Verfahren nach einem der vorhergehenden Ansprüche, **dadurch gekennzeichnet,**
**dass** die Automatisierungsvorrichtung (13) Greifmittel aufweist, und die Greifmittel sowohl Werkstücke (20, 20a-20e) als auch Kennzeichnungselemente (24, 24a-24e) ergreifen,
insbesondere wobei die Greifmittel die Werkstücke (20, 20a-20e) und die Kennzeichnungselemente (24, 24a-24e) jeweils ansaugen.

14. Verfahren nach einem der vorhergehenden Ansprüche, **dadurch gekennzeichnet,**
**dass** die Automatisierungsvorrichtung (13) einen Werkstückwagen (50) umfasst, in den sowohl Werkstücke (20, 20a-20e) als auch Kennzeichnungselemente (24, 24a-24e) eingeworfen werden, insbesondere über einen Werkstücktrichter (48),
und **dass** der Werkstückwagen (50) zumindest über einem Teil der Werkstücksammeleinheiten (17a-17e) verfährt und durch Öffnen eines Auswurfs (51) die Werkstücke (20, 20a-20e) und die Kennzeichnungselemente (24, 24a-24e) über einer jeweiligen Werkstücksammeleinheit (17a-17e) fallen lässt.

15. Verfahren nach einem der vorhergehenden Ansprüche, **dadurch gekennzeichnet, dass** als Kennzeichnungselement (24, 24a-24e) eine Karte (67), insbesondere eine Kunststoffkarte oder mit Kunststoff ummantelte Karte (67), eingesetzt wird.

16. Produktionsstation (1) für Werkstücke (20, 20a-20e), insbesondere zur Durchführung eines Verfahrens nach einem der vorhergehenden Ansprüche, umfassend
- eine Produktionsmaschine (2) zum Produzieren einer Vielzahl von Werkstücken (20, 20a-20e),
- eine Automatisierungsvorrichtung (13) zum Verbringen der von der Produktionsmaschine (2) produzierten Werkstücke (20, 20a-20e) zu Bereitstellungsorten (16a-16e) für Werkstücksammeleinheiten (17a-17e),
- eine Steuerungsvorrichtung (31) zum Ansteuern der Automatisierungsvorrichtung (13), so dass die produzierten Werkstücke (20, 20a-20e) sortiert auf die Bereitstellungsorte (16a-16e) verteilt werden,
- eine Vielzahl von Kennzeichnungselementen (24, 24a-24e),
**dadurch gekennzeichnet,**
**dass** die Produktionsstation (1) weiterhin umfasst
- eine Bereitstellungsvorrichtung (23) zum Bereitstellen von Kennzeichnungselementen (24, 24a-24e), wobei die von der Bereitstellungsvorrichtung (23) breitgestellten Kennzeichnungselemente (24, 24a-24e) jeweils direkt und/oder indirekt Informationen (60) über jeweils den Bereitstellungsorten (16a-16e) zusortierte Werkstücke (20, 20a-20e) tragen, und
- eine Beförderungsvorrichtung (26) zum Verbringen der mit der Bereitstellungsvorrichtung (23) bereitgestellten Kennzeichnungselemente (24, 24a-24e) von der Bereitstellungsvorrichtung (23) zu einer Übergabezone (27) im Arbeitsbereich (29) der Automatisierungsvorrichtung (13),
**dass** die Automatisierungsvorrichtung (13) weiterhin ausgebildet ist zum Verbringen der bereitgestellten Kennzeichnungselemente (24, 24a-24e) von der Übergabezone (27) zu den Bereitstellungsorten (16a-16e),
und **dass** die Steuerungsvorrichtung (31) weiterhin ausgebildet ist zum Ansteuern der Automatisierungsvorrichtung (13), so dass die von der Bereitstellungsvorrichtung (23) bereitgestellten Kennzeichnungselemente (24, 24a-24e) dem jeweiligen Bereitstellungsort (16a-16e) der Werkstücke (20, 20a-20e), über die sie direkt und/oder indirekt Informationen (60) tragen, zusortiert werden.

17. Produktionsstation (1) nach Anspruch 16, **dadurch gekennzeichnet, dass** die Bereitstellungsvorrichtung (23) eine Schreibvorrichtung (25) zum Beschreiben der bereitzustellenden Kennzeichnungselemente (24, 24a-24e) direkt mit den Informationen (60) der jeweils den Bereitstellungsorten (16a-16e) zusortierten Werkstücke (20, 20a-20e) und/oder mit einer Zuordnungskennzeichnung (83) für diese Informationen (60) umfasst.

18. Produktionsstation (1) nach Anspruch 16 oder 17, **dadurch gekennzeichnet, dass** die Bereitstellungsvorrichtung (23) umfasst
- eine Lesevorrichtung (81) zum Auslesen von in den bereitzustellenden Kennzeichnungselementen (24, 24a-24e) fest hinterlegten Zuordnungskennzeichnungen (83) oder
- eine Bestimmungsvorrichtung zur Bestimmung der Position eines bereitzustellenden Kennzeichnungselements (24, 24a-24e) bezüglich einer bekannten Ordnung, in der Kennzeichnungselemente (24, 24a-24e) in einem Vorrat gelagert sind, insbesondere wobei die Kennzeichnungselemente (24, 24a-24e) des Vorrats einen Stapel (85) bilden und die Bestimmungsvorrichtung eine Zählvorrichtung (82) für von dem Stapel (85) genommene Kennzeichnungselemente (24, 24a-24e) umfasst.

19. Produktionsstation (1) nach einem der Ansprüche 16 bis 18, **dadurch gekennzeichnet, dass** die Beförderungsvorrichtung (26) eine Rutsche (28) umfasst, über die die bereitgestellten Kennzeichnungselemente (24, 24a-24e) von der Bereitstellungsvorrichtung (23) in die Übergabezone (27) im Arbeitsbereich (29) der Automatisierungsvorrichtung (13) rutschen können.

20. Produktionsstation (1) nach einem der Ansprüche 16 bis 19, **dadurch gekennzeichnet, dass** die Produktionsmaschine (2) als eine Flachbettbearbeitungsmaschine oder Schneidmaschine, insbesondere Laserschneidmaschine, oder Stanzmaschine, oder eine kombinierte Schneid- und Stanzmaschine ausgebildet ist.

21. Produktionsstation (1) nach einem der Ansprüche 16 bis 20, **dadurch gekennzeichnet, dass** die Kennzeichnungselemente (24, 24a-24e) jeweils einen RFID-Chip (65) aufweisen.

22. Produktionsstation (1) nach einem der Ansprüche 16 bis 21, **dadurch gekennzeichnet, dass** die Automatisierungsvorrichtung (13) einen Sauggreifer (14) aufweist, und dass die Kennzeichnungselemente (24, 24a-24e) einen ebenen Abschnitt (66) zum Anlegen des Sauggreifers (14) aufweisen,
insbesondere wobei die Kennzeichnungselemente (24, 24a-24e) als Karten (67) ausgebildet sind.

23. Produktionsstation (1) nach einem der Ansprüche 16 bis 22, **dadurch gekennzeichnet, dass** die Produktionsstation (1) mehrere Werkstücksammeleinheiten (17a-17e) umfasst, die jeweils an einem zugehörigen Bereitstellungsort (16a-16e) angeordnet sind, insbesondere wobei zumindest ein Teil der Werkstücksammeleinheiten (17a-17e) als Palette (18, 21, 22) und/oder Teilbereich einer Palette (18, 21, 22) und/oder als Behälter (45a-45e) für Werkstücke (20, 20a-20e) ausgebildet ist.

24. Produktionsstation (1) nach Anspruch 23, **dadurch gekennzeichnet, dass** die Produktionsstation (1) wenigstens eine Werkstücksammeleinrichtung (19) umfasst, die mehrere Werkstücksammeleinheiten (17a-17e) umfasst, die über die Werkstücksammeleinrichtung (19) gemeinsam transportierbar sind,
insbesondere wobei die Werkstücksammeleinrichtung (19) einen Rollwagen (47) mit mehreren Behältern (45a-45e) für Werkstücke (20, 20a-20e) und/oder Ablageplätzen für Stapel (30a-30c) von Werkstücken (20, 20a-20e), oder eine Palette (18, 21, 22) mit mehreren Ablageplätzen für Stapel (30a-30c) von Werkstücken (20, 20a-20e) umfasst.

25. Verfahren zum Aufrüsten einer Produktionsmaschine (2) zum Produzieren einer Vielzahl von Werkstücken,
wobei die Produktionsmaschine (2) eine Automatisierungsvorrichtung (13) zum Verbringen der von der Produktionsmaschine (2) produzierten Werkstücke (20, 20a-20e) zu Bereitstellungsorten (16a-16e) für Werkstücksammeleinheiten (17a-17e) und eine Steuerungsvorrichtung (31) zum Ansteuern der Automatisierungsvorrichtung (13), so dass die produzierten Werkstücke (20, 20a-20e) sortiert auf die Bereitstellungsorte (16a-16e) verteilt werden, aufweist,
zu einer Produktionsstation (1) nach einem der Ansprüche 16 bis 24, mit den Verfahrensschritten:
- Bereitstellen einer Bereitstellungsvorrichtung (23) zum Bereitstellen von Kennzeichnungselementen (24, 24a-24e), wobei die von der Bereitstellungsvorrichtung (23) bereitgestellten Kennzeichnungselemente (24, 24a-24e) direkt und/oder indirekt Informationen (60) über jeweils den Bereitstellungsorten (16a-16e) zusortierte Werkstücke (20, 20a-20e) tragen, und
- Bereitstellen einer Beförderungsvorrichtung (26) zum Verbringen der mit der Bereitstellungsvorrichtung (23) bereitgestellten Kennzeichnungselemente (24, 24a-24e) von der Bereitstellungsvorrichtung (23) zu einer Übergabezone (27) im Arbeitsbereich (29) der Automatisierungsvorrichtung (13), so dass die Automatisierungsvorrichtung (13) die bereitgestellten Kennzeichnungselemente (24, 24a-24e) von der Übergabezone (27) zu den Bereitstellungsorten (16a-16e) verbringen kann, und
- Programmieren der Steuerungsvorrichtung (31) zum Ansteuern der Automatisierungsvorrichtung (13), so dass die von der Bereitstellungsvorrichtung (23) bereitgestellten Kennzeichnungselemente (24, 24a-24e) dem jeweiligen Bereitstellungsort (16a-16e) der Werkstücke (20, 20a-20e), über die sie direkt und/oder indirekt Informationen (60) tragen, zusortiert werden.

## Claims

1. Method for identifying workpieces (20, 20a-20e),
a production machine (2) producing a large number of workpieces (20, 20a-20e) and the produced workpieces (20, 20a-20e) being distributed in a sorted manner to a plurality of workpiece collecting units (17a-17e), the produced workpieces (20, 20a-20e) being taken to the workpiece collecting units (17a-17e) by means of an automation device (13),
and identification elements (24, 24a-24e) being arranged on the workpiece collecting units (17a-17e), which identification elements each directly and/or indirectly carry information (60) regarding the workpieces (20, 20a-20e) on the workpiece collecting units (17a-17e),
**characterized in**
**that** the identification elements (24, 24a-24e) provided by a provision device (23), which identification elements each directly and/or indirectly carry information (60) regarding the workpieces (20, 20a-20e) on the workpiece collecting units (17a-17e), are taken from the location of the provision device (23) to a transfer zone (27) in the working region (29) of the automation device (13) by means of a conveying device (26),
and in that the automation device (13) takes each provided identification element (24, 24a-24e) from the transfer zone (27) to the associated workpiece collecting unit (17a-17e).

2. Method according to claim 1, **characterized in that** the provision device (23) directly writes the information (60) regarding the workpieces (20, 20a-20e) to the identification elements (24, 24a-24e) to be provided.

3. Method according to either of the preceding claims, **characterized in that** the identification elements (24, 24a-24e) provided by the provision device (23) each carry an individual assignment identification (83),
and **in that**, in a database (86), the assignment identifications (83) of the identification elements (24, 24a-24e) provided or to be provided are assigned the information (60) regarding the workpieces (20, 20a-20e) on the workpiece collecting units (17a-17e).

4. Method according to claim 3, **characterized in that** the provision device (23) writes an assignment identification (83) to each of the identification elements (24, 24a-24e) to be provided.

5. Method according to claim 3, **characterized in that** an assignment identification (83) permanently stored on the identification elements (24, 24a-24e) to be provided is read out by means of the provision device (23).

6. Method according to claim 3, **characterized in**
**that** the provision device (23) removes the identification elements (24, 24a-24e) to be provided from a store in which identification elements (24, 24a-24e) having known, permanently stored assignment identifications (83) in a known order are stored, in particular the identification elements (24, 24a-24e) of the store forming a stack (85), and in that an assignment identification (83) for a identification element (24, 24a-24e) to be provided is determined by means of removal information, the removal information describing the position of the identification element (24, 24a-24e) to be provided in relation to the known order, in particular the removal information being a counting index of the identification elements (24, 24a-24e) taken from the stack (85).

7. Method according to any of the preceding claims, **characterized in that** the provision device (23) writes the identification element (24, 24a-24e) in both a machine-readable manner and a human-readable manner.

8. Method according to any of the preceding claims, **characterized in that** the provision device (23) reversibly writes the identification element (24, 24a-24e).

9. Method according to any of the preceding claims, **characterized in that** the provision device (23) programs an RFID chip (65) of the identification element (24, 24a-24e).

10. Method according to any of the preceding claims, **characterized in that** the provision device (23) prints the identification element (24, 24a-24e).

11. Method according to any of the preceding claims, **characterized in that** the automation device (13) forms a stack (30a-30c) of workpieces (20, 20a-20e) on at least a part of the workpiece collecting units (17a-17e) and places an identification element (24, 24a-24e) on top of or next to the stack (30a-30c) of workpieces (20, 20a-20e),
in particular at least a part of the workpiece collecting units (17a-17e) each having a pallet (18, 21, 22) or comprising a portion of a pallet (18, 21, 22) on which the stack (30a-30c) is formed.

12. Method according to any of the preceding claims, **characterized in that** the automation device (13) forms a pile (46a-46e) of workpieces (20, 20a-20e) on at least a part of the workpiece collecting units (17a-17e) and places an identification element (24, 24a-24e) on top of or next to the pile (46a-46e) of workpieces (20, 20a-20e),
in particular at least a part of the workpiece collecting units (17a-17e) having a container (45a-45e), preferably a closable container (45a-45e), in which the pile (46a-46e) is formed.

13. Method according to any of the preceding claims, **characterized in that** the automation device (13) has gripping means, and the gripping means grip both workpieces (20, 20a-20e) and identification elements (24, 24a-24e),
in particular the gripping means suctioning the workpieces (20, 20a-20e) and the identification elements (24, 24a-24e) in each case.

14. Method according to any of the preceding claims, **characterized in that** the automation device (13) comprises a workpiece cart (50) into which both workpieces (20, 20a-20e) and identification elements (24, 24a-24e) are thrown, in particular via a workpiece funnel (48),
and **in that** the workpiece cart (50) moves over at least a part of the workpiece collecting units (17a-17e) and, by opening an ejection means (51), drops the workpieces (20, 20a-20e) and the identification elements (24, 24a-24e) over a workpiece collecting unit (17a-17e) in each case.

15. Method according to any of the preceding claims, **characterized in that** a card (67), in particular a plastics card or a card (67) encased in plastics material, is used as the identification element (24, 24a-24e).

16. Production station (1) for workpieces (20, 20a-20e), in particular for carrying out a method according to any of the preceding claims, comprising
- a production machine (2) for producing a large number of workpieces (20, 20a-20e),
- an automation device (13) for taking the workpieces (20, 20a-20e) produced by the production machine (2) to provision locations (16a-16e) for workpiece collecting units (17a-17e),
- a control device (31) for controlling the automation device (13) such that the produced workpieces (20, 20a-20e) are distributed in a sorted manner to the provision locations (16a-16e),
- a plurality of identification elements (24, 24a-24e),
**characterized in**
**that** the production station (1) further comprises
- a provision device (23) for providing identification elements (24, 24a-24e), the identification elements (24, 24a-24e) provided by the provision device (23) each directly and/or indirectly carrying information (60) regarding workpieces (20, 20a-20e) sorted to the respective provision locations (16a-16e), and
- a conveying device (26) for taking the identification elements (24, 24a-24e) provided by the provision device (23) from the provision device (23) to a transfer zone (27) in the working region (29) of the automation device (13),
in that the automation device (13) is further designed to take the provided identification elements (24, 24a-24e) from the transfer zone (27) to the provision locations (16a-16e),
and in that the control device (31) is further designed to control the automation device (13) such that the identification elements (24, 24a-24e) provided by the provision device (23) are sorted to the relevant provision location (16a-16e) of the workpieces (20, 20a-20e) regarding which said identification elements directly and/or indirectly carry information (60).

17. Production station (1) according to claim 16, **characterized in that** the provision device (23) has a writing device (25) for directly writing the information (60) of the workpieces (20, 20a-20e) sorted to the respective provision locations (16a-16e) and/or an assignment identification (83) for this information (60) to the identification elements (24, 24a-24e) to be provided.

18. Production station (1) according to either claim 16 or claim 17, **characterized in that** the provision device (23) comprises
- a reading device (81) for reading out assignment identifications (83) permanently stored in the identification elements (24, 24a-24e) to be provided, or
- a determination device for determining the position of an identification element (24, 24a-24e) to be provided with respect to a known order in which identification elements (24, 24a-24e) are stored in a store, in particular the identification elements (24, 24a-24e) of the store forming a stack (85) and the determination device comprising a counting device (82) for identification elements (24, 24a-24e) taken from the stack (85).

19. Production station (1) according to any of claims 16 to 18, **characterized in that** the conveying device (26) comprises a chute (28) via which the identification elements (24, 24a-24e) provided can slide from the provision device (23) into the transfer zone (27) in the working region (29) of the automation device (13).

20. Production station (1) according to any of claims 16 to 19, **characterized in that** the production machine (2) is designed as a flat-bed processing machine or cutting machine, in particular a laser cutting machine, or punching machine, or a combined cutting and punching machine.

21. Production station (1) according to any of claims 16 to 20, **characterized in that** the identification elements (24, 24a-24e) each have an RFID chip (65).

22. Production station (1) according to any of claims 16 to 21, **characterized in that** the automation device (13) has a suction gripper (14), and **in that** the identification elements (24, 24a-24e) have a flat portion (66) for placing the suction gripper (14), in particular the identification elements (24, 24a-24e) being designed as cards (67).

23. Production station (1) according to any of claims 16 to 22, **characterized in that** the production station (1) comprises a plurality of workpiece collecting units (17a-17e), each of which is arranged at an associated provision location (16a-16e),
in particular at least a part of the workpiece collecting units (17a-17e) being designed as a pallet (18, 21, 22) and/or a portion of a pallet (18, 21, 22) and/or as a container (45a-45e) for workpieces (20, 20a-20e).

24. Production station (1) according to claim 23, **characterized in that** the production station (1) comprises at least one workpiece collecting device (19) which comprises a plurality of workpiece collecting units (17a-17e) which can be transported together via the workpiece collecting device (19),
in particular the workpiece collecting device (19) comprising a trolley (47) having a plurality of containers (45a-45e) for workpieces (20, 20a-20e) and/or storage spaces for stacks (30a-30c) of workpieces (20, 20a-20e), or a pallet (18, 21, 22) having a plurality of storage spaces for stacks (30a-30c) of workpieces (20, 20a-20e).

25. Method for upgrading a production machine (2) for producing a large number of workpieces,
wherein the production machine (2) has an automation device (13) for taking the workpieces (20, 20a-20e) produced by the production machine (2) to provision locations (16a-16e) for workpiece collecting units (17a-17e) and a control device (31) for controlling the automation device (13) such that the workpieces (20, 20a-20e) produced are distributed in a sorted manner to the provision locations (16a-16e), to form a production station (1) according to any of claims 16 to 24, comprising the method steps of:
- providing a provision device (23) for providing identification elements (24, 24a-24e), wherein the identification elements (24, 24a-24e) provided by the provision device (23) each directly and/or indirectly carry information (60) regarding workpieces (20, 20a-20e) sorted to the respective provision locations (16a-16e), and
- providing a conveying device (26) for taking the identification elements (24, 24a-24e) provided by the provision device (23) from the provision device (23) to a transfer zone (27) in the working region (29) of the automation device (13), such that the automation device (13) can take the identification elements (24, 24a-24e) provided from the transfer zone (27) to the provision locations (16a-16e), and
- programming the control device (31) to control the automation device (13) such that the identification elements (24, 24a-24e) provided by the provision device (23) are sorted to the relevant provision location (16a-16e) of the workpieces (20, 20a-20e) regarding which said identification elements directly and/or indirectly carry information (60).

## Revendications

1. Procédé de caractérisation de pièces (20, 20a-20e),
une machine de production (2) produisant une multiplicité de pièces (20, 20a-20e), et les pièces produites (20, 20a-20e) étant ventilées avec répartition parmi plusieurs unités (17a-17e) collectrices de pièces,
sachant que lesdites pièces produites (20, 20a-20e) sont déplacées vers lesdites unités (17a-17e) collectrices de pièces, à l'aide d'un dispositif d'automatisation (13),
et sachant que des éléments de caractérisation (24, 24a-24e), implantés sur lesdites unités (17a-17e) collectrices de pièces, portent à chaque fois, en mode direct et/ou indirect, des informations (60) relatives aux pièces (20, 20a-20e) situées sur lesdites unités (17a-17e) collectrices de pièces,
**caractérisé par le fait**
**que** les éléments de caractérisation (24, 24a-24e), délivrés par un dispositif d'approvisionnement (23) et portant à chaque fois, en mode direct et/ou indirect, des informations (60) relatives aux pièces (20, 20a-20e) situées sur les unités (17a-17e) collectrices de pièces, sont déplacés au moyen d'un dispositif de convoyage (26), à partir de l'emplacement dudit dispositif d'approvisionnement (23), vers une zone de transfert (27) dans la zone de travail (29) du dispositif d'automatisation (13) ;
et par le fait que ledit dispositif d'automatisation (13) déplace un élément de caractérisation (24, 24a-24e) respectivement délivré, à partir de ladite zone de transfert (27), vers l'unité associée (17a-17e) collectrice de pièces.

2. Procédé selon la revendication 1, **caractérisé par le fait que** le dispositif d'approvisionnement (23) inscrit à chaque fois, en mode direct, les informations (60) relatives aux pièces (20, 20a-20e) sur les éléments de caractérisation (24, 24a-24e) devant être délivrés.

3. Procédé selon l'une des revendications précédentes, **caractérisé par le fait que** les éléments de caractérisation (24, 24a-24e) délivrés par le dispositif d'approvisionnement (23) portent, à chaque fois, une caractérisation d'attribution (83) individuelle ;
et **par le fait que** les informations (60) relatives aux pièces (20, 20a-20e) situées sur les unités (17a-17e) collectrices de pièces sont respectivement affectées, dans une banque de données (86), aux caractérisations d'attribution (83) des éléments de caractérisation (24, 24a-24e) délivrés ou devant être délivrés.

4. Procédé selon la revendication 3, **caractérisé par le fait qu'**une caractérisation d'attribution (83) est inscrite à chaque fois, par le dispositif d'approvisionnement (23), sur les éléments de caractérisation (24, 24a-24e) devant être délivrés.

5. Procédé selon la revendication 3, **caractérisé par le fait qu'**une caractérisation d'attribution (83), mémorisée de manière constante sur les éléments de caractérisation (24, 24a-24e) devant être délivrés, est lue à chaque fois au moyen du dispositif d'approvisionnement (23).

6. Procédé selon la revendication 3, **caractérisé par le fait que** le dispositif d'approvisionnement (23) prélève les éléments de caractérisation (24, 24a-24e), devant être délivrés, à partir d'une réserve dans laquelle des éléments de caractérisation (24, 24a-24e) munis de caractérisations d'attribution (83) connues, mémorisées de manière constante, sont stockés suivant un ordre connu, sachant notamment que les éléments de caractérisation (24, 24a-24e) de ladite réserve forment une pile (85) ;
et **par le fait qu'**une caractérisation d'attribution (83), dédiée à un élément de caractérisation (24, 24a-24e) devant être délivré, est spécifiée au moyen d'une information de prélèvement, laquelle information de prélèvement décrit l'emplacement dudit élément de caractérisation (24, 24a-24e) devant être délivré, par rapport audit ordre connu, sachant notamment que ladite information de prélèvement est un index de comptage des éléments de caractérisation (24, 24a-24e) enlevés de ladite pile (85).

7. Procédé selon l'une des revendications précédentes, **caractérisé par le fait que** le dispositif d'approvisionnement (23) porte, sur l'élément de caractérisation (24, 24a-24e), des inscriptions lisibles aussi bien par des machines, que par des humains.

8. Procédé selon l'une des revendications précédentes, **caractérisé par le fait que** le dispositif d'approvisionnement (23) porte des inscriptions réversibles sur l'élément de caractérisation (24, 24a-24e).

9. Procédé selon l'une des revendications précédentes, **caractérisé par le fait que** le dispositif d'approvisionnement (23) programme une puce RFID (65) de l'élément de caractérisation (24, 24a-24e).

10. Procédé selon l'une des revendications précédentes, **caractérisé par le fait que** le dispositif d'approvisionnement (23) porte une mention imprimée sur l'élément de caractérisation (24, 24a-24e).

11. Procédé selon l'une des revendications précédentes, **caractérisé par le fait que** le dispositif d'automatisation (13) forme à chaque fois un empilement (30a-30c) de pièces (20, 20a-20e), au moins sur une partie des unités (17a-17e) collectrices de pièces, et dépose un élément de caractérisation (24, 24a-24e) dans la zone supérieure, sur ledit empilement (30a-30c) de pièces (20, 20a-20e) ou à côté de ce dernier,
sachant notamment qu'au moins une partie desdites unités (17a-17e) collectrices de pièces inclut, à chaque fois, une palette (18, 21, 22) ou une région partielle d'une palette (18, 21, 22) sur laquelle ledit empilement (30a-30c) est respectivement formé.

12. Procédé selon l'une des revendications précédentes, **caractérisé par le fait que** le dispositif d'automatisation (13) forme à chaque fois un amoncellement (46a-46e) de pièces (20, 20a-20e), au moins sur une partie des unités (17a-17e) collectrices de pièces, et dépose un élément de caractérisation (24, 24a-24e) dans la zone supérieure, sur ledit amoncellement (46a-46e) de pièces (20, 20a-20e) ou à côté de ce dernier, sachant notamment qu'au moins une partie desdites unités (17a-17e) collectrices de pièces inclut un conteneur (45a-45e), de préférence un conteneur obturable (45a-45e) dans lequel ledit amoncellement (46a-46e) est formé.

13. Procédé selon l'une des revendications précédentes, **caractérisé par le fait que** le dispositif d'automatisation (13) est doté de moyens de préhension, lesquels moyens de préhension saisissent aussi bien des pièces (20, 20a-20e), que des éléments de caractérisation (24, 24a-24e),
sachant notamment que lesdits moyens de préhension provoquent, à chaque fois, une aspiration desdites pièces (20, 20a-20e) et desdits éléments de caractérisation (24, 24a-24e).

14. Procédé selon l'une des revendications précédentes, **caractérisé par le fait que** le dispositif d'automatisation (13) inclut un chariot (50) d'emport de pièces dans lequel aussi bien des pièces (20, 20a-20e), que des éléments de caractérisation (24, 24a-24e) sont déversés, notamment par l'intermédiaire d'une trémie (48) distributrice de pièces ;
et **par le fait que** ledit chariot (50) d'emport de pièces se déplace au moins sur une partie des unités (17a-17e) collectrices de pièces et permet, par ouverture d'un mécanisme d'éjection (51), une chute desdites pièces (20, 20a-20e) et desdits éléments de caractérisation (24, 24a-24e) au-dessus d'une unité respective (17a-17e) collectrice de pièces.

15. Procédé selon l'une des revendications précédentes, **caractérisé par le fait qu'**une carte (67), en particulier une carte en matière plastique ou une carte (67) enrobée de matière plastique, est utilisée en tant qu'élément de caractérisation (24, 24a-24e).

16. Poste de production (1) dévolu à des pièces (20, 20a-20e), notamment destiné à la mise en œuvre d'un procédé conforme à l'une des revendications précédentes, comprenant
- une machine de production (2), conçue pour produire une multiplicité de pièces (20, 20a-20e),
- un dispositif d'automatisation (13) conçu pour déplacer les pièces (20, 20a-20e), produites par ladite machine de production (2), vers des zones d'approvisionnement (16a-16e) dédiées à des unités (17a-17e) collectrices de pièces,
- un dispositif de commande (31) conçu pour piloter ledit dispositif d'automatisation (13) de façon telle que lesdites pièces produites (20, 20a-20e) soient ventilées, avec répartition, parmi lesdites zones d'approvisionnement (16a-16e),
- une multiplicité d'éléments de caractérisation (24, 24a-24e),
**caractérisé par le fait**
**que** ledit poste de production (1) comprend, en outre,
- un dispositif d'approvisionnement (23), conçu pour délivrer des éléments de caractérisation (24, 24a-24e), sachant que les éléments de caractérisation (24, 24a-24e) délivrés par ledit dispositif d'approvisionnement (23) portent à chaque fois, en mode direct et/ou indirect, des informations (60) relatives à des pièces (20, 20a-20e) respectivement ventilées vers lesdites zones d'approvisionnement (16a-16e), et
- un dispositif de convoyage (26) conçu pour déplacer les éléments de caractérisation (24, 24a-24e) délivrés par ledit dispositif d'approvisionnement (23), à partir dudit dispositif d'approvisionnement (23), vers une zone de transfert (27) dans la zone de travail (29) du dispositif d'automatisation (13) ;
par le fait que ledit dispositif d'automatisation (13) est par ailleurs réalisé en vue de déplacer les éléments de caractérisation (24, 24a-24e) délivrés, à partir de ladite zone de transfert (27), vers lesdites zones d'approvisionnement (16a-16e) ;
et par le fait que le dispositif de commande (31) est par ailleurs réalisé en vue de piloter ledit dispositif d'automatisation (13) de façon telle que les éléments de caractérisation (24, 24a-24e), délivrés par ledit dispositif d'approvisionnement (23), soient ventilés vers la zone respective (16a-16e) d'approvisionnement par les pièces au sujet desquelles ils portent des informations (60), en mode direct et/ou indirect.

17. Poste de production (1) selon la revendication 16, **caractérisé par le fait que** le dispositif d'approvisionnement (23) inclut un dispositif d'écriture (25) conçu pour inscrire en mode direct, sur les éléments de caractérisation (24, 24a-24e) devant être délivrés, les informations (60) relatives aux pièces (20, 20a-20e) respectivement ventilées vers les zones d'approvisionnement (16a-16e), et/ou une caractérisation d'attribution (83) dédiée à ces informations (60).

18. Poste de production (1) selon la revendication 16 ou 17, **caractérisé par le fait que** le dispositif d'approvisionnement (23) inclut
- un dispositif de lecture (81) conçu pour lire des caractérisations d'attribution (83) mémorisées, de manière constante, dans les éléments de caractérisation (24, 24a-24e) devant être délivrés, ou
- un dispositif de détermination conçu pour déterminer l'emplacement d'un élément de caractérisation (24, 24a-24e), devant être délivré, par rapport à un ordre connu suivant lequel des éléments de caractérisation (24, 24a-24e) sont stockés dans une réserve, sachant notamment que les éléments de caractérisation (24, 24a-24e) de ladite réserve forment une pile (85), et que ledit dispositif de détermination inclut un dispositif de comptage (82) destiné à des éléments de caractérisation (24, 24a-24e) enlevés de ladite pile (85).

19. Poste de production (1) selon l'une des revendications 16 à 18, **caractérisé par le fait que** le dispositif de convoyage (26) inclut une goulotte (28) par l'intermédiaire de laquelle les éléments de caractérisation (24, 24a-24e) délivrés peuvent glisser, à partir du dispositif d'approvisionnement (23), vers la zone de transfert (27) dans la zone de travail (29) du dispositif d'automatisation (13).

20. Poste de production (1) selon l'une des revendications 16 à 19, **caractérisé par le fait que** la machine de production (2) est réalisée sous la forme d'une machine d'usinage à plat ou d'une machine de découpage, notamment d'une machine de découpage au laser, ou d'une machine de poinçonnage, voire d'une machine combinée de découpage et de poinçonnage.

21. Poste de production (1) selon l'une des revendications 16 à 20, **caractérisé par le fait que** les éléments de caractérisation (24, 24a-24e) sont respectivement pourvus d'une puce RFID (65).

22. Poste de production (1) selon l'une des revendications 16 à 21, **caractérisé par le fait que** le dispositif d'automatisation (13) est muni d'un préhenseur à dépression (14) ; et **par le fait que** les éléments de caractérisation (24, 24a-24e) présentent une région plane (66) dévolue à l'engagement dudit préhenseur à dépression (14),
lesdits éléments de caractérisation (24, 24a-24e) étant notamment réalisés sous la forme de cartes (67).

23. Poste de production (1) selon l'une des revendications 16 à 22, **caractérisé par le fait que** ledit poste de production (1) comprend plusieurs unités (17a-17e) collectrices de pièces implantées, à chaque fois, au niveau d'une zone d'approvisionnement (16a-16e) associée,
sachant notamment qu'au moins une partie desdites unités (17a-17e) collectrices de pièces est réalisée sous la forme d'une palette (18, 21, 22) et/ou d'une région partielle d'une palette (18, 21, 22), et/ou d'un conteneur (45a-45e) dédié à des pièces (20, 20a-20e).

24. Poste de production (1) selon la revendication 23, **caractérisé par le fait que** ledit poste de production (1) inclut au moins un appareil (19) de collecte de pièces, comprenant plusieurs unités (17a-17e) collectrices de pièces qui peuvent être transportées conjointement par l'intermédiaire dudit appareil (19) de collecte de pièces,
lequel appareil (19) de collecte de pièces inclut, en particulier, un chariot roulant (47) doté de plusieurs conteneurs (45a-45e) dédiés à des pièces (20, 20a-20e), et/ou des zones de dépôt dédiées à des empilements (30a-30c) de pièces (20, 20a-20e), et/ou une palette (18, 21, 22) munie de plusieurs zones de dépôt dédiées à des empilements (30a-30c) de pièces (20, 20a-20e).

25. Procédé de rééquipement d'une machine de production (2) conçue pour produire une multiplicité de pièces,
ladite machine de production (2) comportant un dispositif d'automatisation (13) conçu pour déplacer les pièces (20, 20a-20e), produites par ladite machine de production (2), vers des zones d'approvisionnement (16a-16e) dédiées à des unités (17a-17e) collectrices de pièces, et un dispositif de commande (31) conçu pour piloter ledit dispositif d'automatisation (13) de façon telle que lesdites pièces produites (20, 20a-20e) soient ventilées, avec répartition, parmi lesdites zones d'approvisionnement (16a-16e),
en un poste de production (1) conforme à l'une des revendications 16 à 24, incluant les étapes opératoires consistant à :
- apprêter un dispositif d'approvisionnement (23) conçu pour délivrer des éléments de caractérisation (24, 24a-24e), sachant que les éléments de caractérisation (24, 24a-24e) délivrés par ledit dispositif d'approvisionnement (23) portent à chaque fois, en mode direct et/ou indirect, des informations (60) relatives à des pièces (20, 20a-20e) respectivement ventilées vers lesdites zones d'approvisionnement (16a-16e),
- apprêter un dispositif de convoyage (26) conçu pour déplacer les éléments de caractérisation (24, 24a-24e) délivrés par ledit dispositif d'approvisionnement (23), à partir dudit dispositif d'approvisionnement (23), vers une zone de transfert (27) dans la zone de travail (29) du dispositif d'automatisation (13), de façon telle que ledit dispositif d'automatisation (13) puisse déplacer les éléments de caractérisation (24, 24a-24e) délivrés, à partir de ladite zone de transfert (27), vers lesdites zones d'approvisionnement (16a-16e), et
- programmer le dispositif de commande (31) en vue de piloter ledit dispositif d'automatisation (13) de façon telle que les éléments de caractérisation (24, 24a-24e), délivrés par ledit dispositif d'approvisionnement (23), soient ventilés vers la zone respective (16a-16e) d'approvisionnement par les pièces (20, 20a-20e) au sujet desquelles ils portent des informations (60), en mode direct et/ou indirect.
